# EUROPEAN PATENT SPECIFICATION

(11) **EP 1 735 780 B1**
(45) Date of publication and mention of the grant of the patent: **14.08.2013**
(21) Application number: 05721901.6
(22) Date of filing: 03.03.2005
(51) Int. Cl.: G11B 20/12, G11B 20/18, G11B 27/32, G11B 27/30

(54) **RECORDING MEDIUM WITH STATUS INFORMATION THEREON WHICH CHANGES UPON REFORMATTING AND APPARATUS AND METHODS FOR FORMING, RECORDING, AND REPRODUCING THE RECORDING MEDIUM**
AUFZEICHNUNGSMEDIUM MIT STATUSINFORMATION DARAUF, DIE SICH BEI REFORMATIERUNG ÄNDERT, UND VORRICHTUNG UND VERFAHREN ZUR BILDUNG, AUFZEICHNUNG UND WIEDERGABE DES AUFZEICHNUNGSMEDIUMS
SUPPORT D'ENREGISTREMENT PORTANT DES INFORMATIONS D'ETAT QUI CHANGENT AU REFORMATAGE ET PROCEDE/DISPOSITIF DE FORMATION, D'ENREGISTREMENT ET DE REPRODUCTION DUDIT SUPPORT D'ENREGISTREMENT

(30) Priority: 19.03.2004 US 554356 P; 07.06.2004 US 577181 P; 02.07.2004 KR 2004051610; 09.07.2004 KR 2004053617
(43) Date of publication of application: 27.12.2006
(60) Divisional application: 07111355.9
(73) Proprietor: LG Electronics Inc., Seoul 150-721 (KR)
(72) Inventor: Park, Yong Cheol, Gwacheon-si, Gyeonggi-do, 427-731 (KR)
(74) Representative: Viktor, Rainer
(86) International application number: PCT/KR2005/000595
(87) International publication number: WO 2005/089073

(56) References cited:
- EP-A1- 1 505 597
- EP-A2- 1 600 975
- US-A- 5 815 485
- US-A1- 2002 036 643
- US-A1- 2003 210 627

## Description

### Technical Field

The present invention relates to managing physical access control (PAC) and recording data, media containing PAC and recording data (for example, high density optical discs, such as Blu-ray Disc) and apparatus and methods for recording and/or reproducing data to and/or from the media.

### Background Art

Media, for example, optical discs may be used for recording a large quantity of data. Of the optical discs available, a new high density optical media (HD-DVD), for example, the Blu-ray Disc (hereafter called as "BD") is under development, which enables increased recording and/or storing of high definition video and/or audio data.

BD further includes a rewritable Blu-ray disc (BD-RE), Blu-ray disc writable once (BD-WO), and Blu-ray disc read only (BD-ROM).

Currently, one problem with existing systems is the potential incompatibility between drives of different versions, for example a drive of a previous version with a previous set of capabilities may have difficulty interacting with a medium that has interacted with a drive including at least one capability from a subsequent set of capabilities.

Another problem with existing systems is determining an initialization, re- initialization, formatting, and/or reformatting procedure for physical access control (PAC) information stored on the medium, for example, a rewritable Blu-ray disc (BD-RE).

US 2003/210627 A1 relates to recording digital information signals on a recording medium. It describes a Defect Management system based on a Main Defect Table. Further reference is made to EP-A-1 505 597 (document under Art. 54(3) EPC).

The invention is specified in the claims.

Example embodiments of the present invention provide a PAC on a rewritable recording medium, such as a high density optical disc, and apparatus and methods for recording data to and reproducing data from the medium using the PAC, where the PAC may be initialized, re- initialized, formatted, and/or reformatted.

A method for initializing a medium, such as a high density optical disc may include sorting PACs on the medium into Unknown PACs and Known PACs, if initialization of the medium is possible, initializing the Unknown PACs and the Known PACs, and recording status information on the initialized PACs on a management area of the medium.

The Unknown PAC may be initialized when the cluster having the PAC recorded thereon is writable.

A method for initializing a medium, such as a high density optical disc, may further include setting Disc Definition Structure (DDS) information having PAC status information recorded thereon to a state all the PACs are writable, without initializing the PAC zone at a time of initialization of the medium.

Also, a method for initializing a medium, such as a high density optical disc may include sorting PACs on the medium into Unknown PACs and Known PACs, and if initialization of the medium is possible, initializing the known PACs in the PAC zones, while the Unknown PACs are not initialized.

It is to be understood that both the foregoing general description and the following detailed description of the present invention are exemplary and explanatory and are intended to provide further explanation of the invention as claimed.

### Brief Description of Drawings

The accompanying drawings, which are included to provide a further understanding of example embodiments of the invention and are incorporated in and constitute a part of this application, illustrate example embodiment(s) of the invention where,
FIGs. 1A and 1B illustrate PAC zones on a high density optical disc in accordance with an example embodiment of the present invention;
FIG 2 illustrates an INFO2 zone and an INFO1 zone on a high density optical disc in accordance with an example embodiment of the present invention;
FIG 3 illustrates a PAC recorded on a high density optical disc in accordance with an example embodiment of the present invention;
FIG. 4 illustrates a PAC on a high density optical disc in accordance with an example embodiment of the present invention;
FIG. 5 illustrates an "Unknown PAC Rules" field in accordance with an example embodiment of the present invention;
FIG 6 illustrates a high density optical disc in accordance with an example embodiment of the present invention;
FIG 7 illustrates a Primary PAC zone on a high density optical disc in accordance with an example embodiment of the present invention;
FIG 8 illustrates a PAC zone on a high density optical disc in accordance with an example embodiment of the present invention;
FIG 9 illustrates a DDS on a high density optical disc in accordance with an example embodiment of the present invention;
FIG 10 indicates status information of a PAC zone in accordance with an example embodiment of the present invention;
FIGs. 11A- 11D illustrate structures, each showing a PAC status information field of a DDS which indicates status information of a PAC zone, in accordance with an example embodiment of the present invention;
FIGs. 12A-12B illustrate initializing a PAC in accordance with an example embodiment of the present invention;
FIGs. 13A-13B illustrate initializing a PAC in accordance with another example embodiment of the present invention;
FIGs. 14A-14B illustrate initializing a PAC in accordance with another example embodiment of the present invention;
FIGs. 15A-15B illustrate initializing a PAC in accordance with another example embodiment of the present invention; and
FIG 17 illustrates a block diagram of an optical recording/reproducing apparatus in accordance with an example embodiment of the present invention.

### Best Mode for Carrying Out the Invention

Reference will now be made in detail to example embodiments of the present invention, illustrated in the accompanying drawings. Wherever possible, the same reference numbers will be used throughout the drawings to refer to the same or like parts.

In an example embodiment, in addition to its ordinary and customary meaning, the term "physical access control (PAC)" may include additional information being recorded on the disc for managing/controlling data recording and reproduction for an entire disc or a specific segment within a physical zone of the disc. The term "physical access control (PAC)" maybe referred to as "PAC", "PAC information", and/or "PAC control information" for simplicity. In addition, a zone within the disc on which the PAC is recorded may be referred to as a "PAC zone" and the PAC being recording in the PAC zone in cluster units may be referred to as a "PAC cluster" for simplicity.

Furthermore, a PAC according to example embodiments of the present invention may include an "unknown rule", which may restrict read/write of data for the entire disc or a specific segment, for a drive having a specifically unknown PAC_ID and including a drive of a previous version (for example, a "legacy" version"). A PAC having an "unknown rule" applied thereto may be referred to as an "Unknown PAC". Similarly, a known specific PAC_ID recorded on the PAC may be referred to as a "known rule" and "PAC specific information" that is applied to the PAC may be referred to as a "Known PAC".

In an example embodiment, a "Known PAC" may be a PAC having information related to a date of disc initialization and information (for example, Recorder ID, if one disc is recorded with many recorders, this may be useful information) on a recorder (which may be an optical disc drive) of each cluster on the disc and may be referred to as a "Primary PAC".

A structure in which the PAC is recorded on the PAC zone, and apparatus and method for recording and reproducing a data by using the same will be described with reference to the attached drawings.

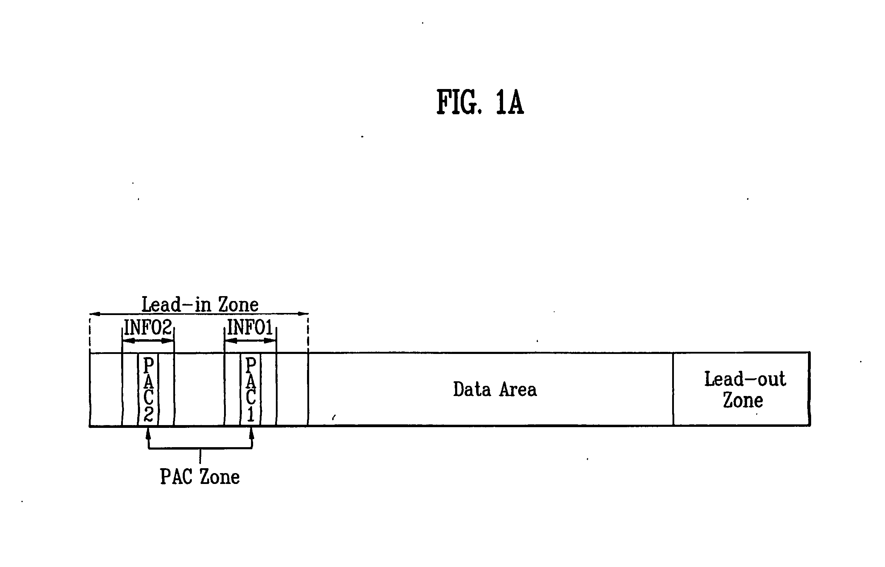

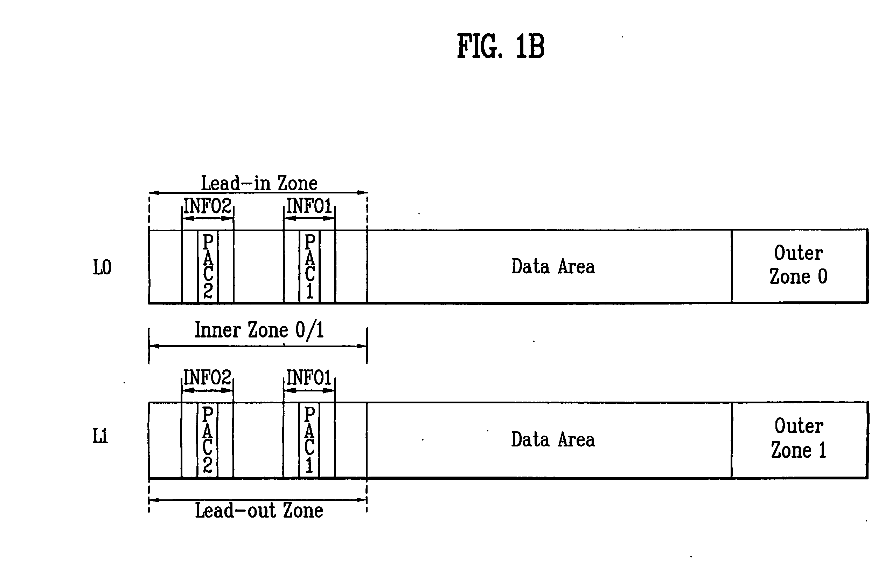

FIGS. 1A or 1B illustrate PAC zones on a high density optical disc in accordance with an example embodiment of the present invention.

Referring to FIG 1A, the high density optical disc may be partitioned from an inner circumference to an outer circumference, into a lead-in zone, a data zone, and a lead-out zone. The lead-in zone may be further partitioned into an INFO2 zone and an INFO1 zone for recording various kinds of information thereon. The INFO2 zone and an INFO1 zone may include PAC (Physical Access Control) zones.

For convenience, a PAC zone assigned to the INFO2 zone may be labeled a PAC2 zone and the PAC zone assigned to the INFO1 zone may be labeled a PAC1 zone. One of the PAC2 zone and the PAC1 zone may have an original PAC recorded thereon and the other one may have a back up zone for recording a copy of the original PAC. If a writing direction is from the inner circumference to the outer circumference of the disc, it may be advantageous that the original PAC is recorded on the PACII zone and the backup PAC is recorded on the PACI zone.

FIG 1B illustrates a diagram of a dual layer disc structure having two recording layers including first recording layer (L0: Layer 0) and second recording layer (L1: Layer 1), wherein each of the recording layers includes a Lead-in/out Zone (also called as an Inner Zone), a Data Area, and an Outer Zone 0, or 1.

Each of the lead-in zone (inner zone 0) and the lead-out zone (inner zone 1) may include an INFO 2 zone and an INFO 1 zone for recording management information of the disc, and the PAC zones may be located in the INFO2 zone and/or the INFO1 zone.

Similar to a single layer disc, a PAC zone assigned to the INF02 zone may be labeled a PAC2 zone and the PAC zone assigned to the INFO1 zone may be labeled a PAC1 zone. One of the PAC2 zone and the PAC1 zone may have an original PAC recorded thereon and the other one may have a back up zone for recording a copy of the original PAC. If a writing direction is from the inner circumference to the outer circumference of the disc, it may be advantageous that the original PAC is recorded on the PACII zone and the backup PAC is recorded on the PACI zone.

In the example shown in FIG 1B, because the PAC1 and PAC2 zones are not only in the lead-in zone, but also in the lead-out zone for the dual layer disc, the dual layer disc has a PAC size two times greater than the single layer disc.

The PAC zone may be provided to handle problems that may occur when an older version of a drive apparatus cannot detect functions on a disc added having functions compatible with a newer version of a drive apparatus. The PAC zone may handle compatibility problems using one or more an "unknown rules".

An "unknown rule" may be used to control predictable operations of the disc, for example, basic control of read, write, etc., linear replacement of a defective zone, logical overwrite, etc. An area may also be provided on the disc, indicating where the "unknown rule" is applicable, for example, segments for defining the entire disc or a certain portion of the disc, which is described later in more detail.

In areas of the disc managed by the "unknown rule", there may be provided a DMA (Disc Management Area), a Spare Area, a User Data Area, and/or other similar areas.

In areas of the disc managed by the "unknown rule", there are a DMA (Disc Management Area), a Spare Area, a User Data Area, and the like, and particularly, with regard to the User Data Area, segment areas which are predetermined areas on the disc the "unknown rule" is applicable thereto can be designated thereto. (The segment will be described in more detail, later.)

That is, by using the "unknown rule", rules and/or other operations for controlling predictable operations of the above areas, such as, starting from basic operations of recording and reproducing, linear replacement of a defective area, logical overwrite of the BD-WO, and/or other similar operations may be defined.

Thus, by defining an area of the disc, an older.version drive apparatus is able to access by using the "unknown rule", a newer version of the disc reduces unnecessary access operation of the older version drive apparatus.

Moreover, by defining an accessible area on a physical area of the disc for an older version drive apparatus to access by using the PAC, a data area containing user data recorded thereon can be protected more robustly and/or unauthorized access (for example, hacking) of the disc may be prevented or reduced.

The INF02 zone and the INFO1 zone having the PACII and I zones therein in the lead-in zone may be reviewed in view of writable characteristics of the high density optical disc.

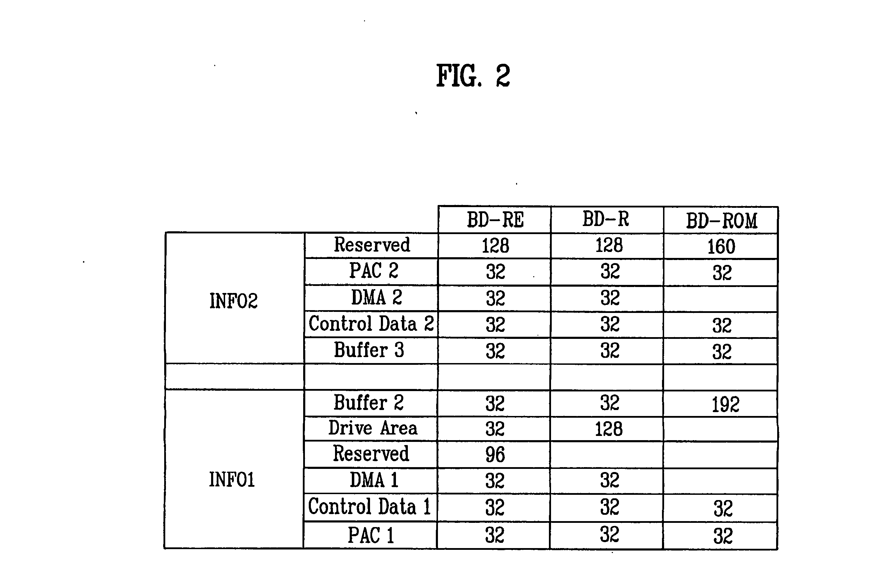

FIG 2 illustrates INF02 zone and the INFO1 zone on a high density optical disc in accordance with an example embodiment of the present invention.

Referring to FIG 2, for an example BD-RE high density optical disc, the INFO2 zone may have 256 clusters including 32 clusters of PACII zone, 32 clusters of DMA (Defect Management Area) 2 zone for management of defects, 32 clusters of CD (Control Data) 2 zone having control information recorded thereon, and/or 32 clusters of BZ (Buffer Zone) 3 zone of a buffer zone.

The INFO1 zone may include 32 clusters of BZ2 zone of a buffer area, 32 clusters of drive area which may be a drive area for storing information specific to a drive, 32 clusters of DMA1 zone for managing defects, 32 clusters of CD1 zone for recording control information, and/or a BZ1-PACI zone utilizable as the PAC zone.

For a write once high density optical disc (BD-R), the INFO2 zone may have 256 clusters including a PACII zone, a DMA 2 zone, a CD 2 zone, and a BZ 3 zone, each with 32 clusters, and the INFO1 zone includes a BZ2 zone, a DMA1 zone, a CD1 zone, and/or a BZ1-PACI zone, each with 32 clusters, and 128 clusters of drive area.

For a read only high density optical disc (BD-ROM), the INFO2 zone may have 256 clusters including a PACII zone, a CD 2 zone, and a BZ 3 zone, each with 32 clusters, and the INFO1 zone 256 clusters including a CD1 zone, and/or a BZ1-PACI zone, each with 32 clusters. The PAC zones of example embodiments of the present invention may be assigned to the INFO2 zone and/or the INFO1 zone in the lead-in zone in 32 clusters each, according to rewritable characteristics of the high density optical disc.

In an example of a dual layer disc having two recording layers, the PAC zone may be designated, not only in the lead-in zone, but also in the lead-out zone, such that one PAC zone may have 64 clusters.

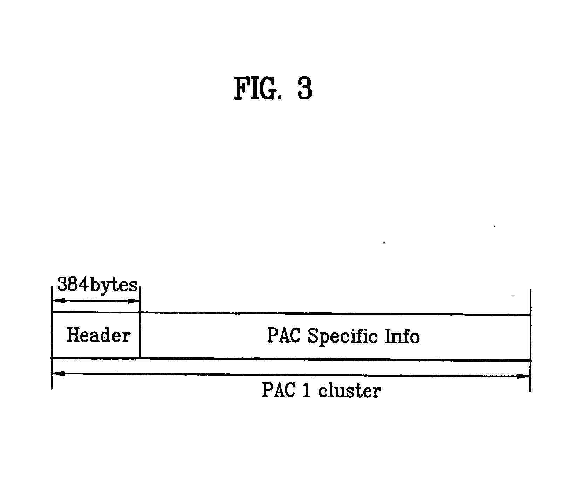

In a PAC zone of 32 clusters (or 64 clusters), one PAC may have one cluster, for recording a plurality of valid PACs. There also may be a plurality of one cluster sized PACs if desired. An example structure in which one PAC is recorded as one cluster is described with reference to FIG 3.

FIG 3 illustrates a diagram of a structure of a PAC recorded on a high density optical disc in accordance with an example embodiment of the present invention.

Referring to FIG 3, one PAC of one cluster size (32 sectors) may include a header zone and a specific information zone, specific to a particular disc drive (for example, optical disc drive). The PAC header zone may have 384 bytes allocated to a first sector of the PAC, for recording various kinds of PAC information, such as information on an "unknown PAC rule" and segments, and another area of the PAC zone may have information specific to the (optical) disc drive may be referred to as "known rules" recorded thereon.

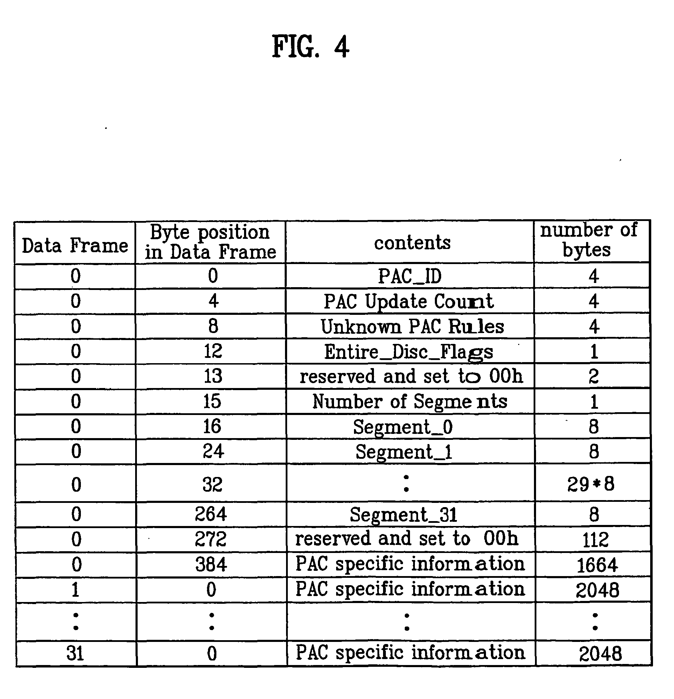

An example structure of a PAC recorded in above structure is described with reference to FIG. 4. For convenience, in the description, particular fields of the PAC that require more detailed description will refer to drawings that illustrate the particular fields.

FIG 4 illustrates a diagram showing a structure of a PAC on a high density optical disc in accordance with an example embodiment of the present invention.

Referring to FIG 4, the PAC may include a header portion (in an example, up to 384 bytes of the first frame)applicable to all PACs and an area having information specific to the drive, recorded thereon.

An example header portion may include 4 bytes of "PAC_ID", 4 bytes of "unknown PAC Rules", 1 byte of "Entire Disc Flag", 1 byte of "Number of Segments", and/or 32 segments "Segment_0 ∼ Segment_31" each with 8 bytes.

The "PAC_ID" may provide the present PAC status and identification codes, for example, if the "PAC_ID" is '00 00 00 00h', the "PAC_ID" may indicate that the present PAC is not used, and if the "PAC_ID" is 'FF FF FF FFh', the "PAC_ID" may indicate that the present PAC zone is available for use again even if the PAC zone has been used previously.

By recording the "PAC_ID" in predetermined bits, such as '54 53 54 00h', the "PAC_ID" is used as a code for determining if the disc is one that the present drive can make free access. That is, if the present drive does not know the "PAC_ID" applied thus, determining that this is a case when the present drive can not understand the present PAC under a reason of version mismatch, or the like, the '54 53 54 00h' is used as code requiring to refer to information recorded on the "Unknown PAC Rules" field.

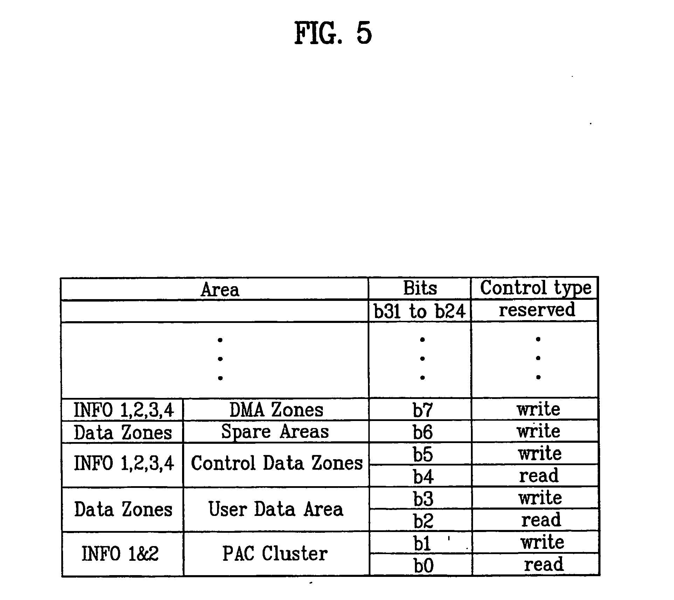

As described, the "Unknown PAC Rules" field may be used as a field that designates an operation range of a drive that can not recognize the present PAC, which will be described further with reference to FIG 5.

FIG 5 illustrates a diagram showing a configuration of an "Unknown PAC Rules" field in accordance with an example embodiment of the present invention.

Referring to FIG 5, a degree of controllability of various areas on the disc may be enabled by the "Unknown PAC Rules". In this example, the "Area" column in Fig. 5 represents the controllable areas on the disc, the "Control" column represents control types, such as read/write etc., and "Number of bits" column represents a number of bits required for control. The additional bits in the "Number of bits" column may represent cases of dual layer disc with two recording/reproduction sides.

Referring to FIG 5, a degree of controllability of various areas on the disc may be enabled by the "Unknown PAC Rules". In this example, the "Area" column in Fig. 5 represents the controllable areas on the disc, the "Control" column represents control types, such as read/write etc., and "Number of bits" column represents a number of bits required for control. The additional bits in the "Number of bits" column may represent cases of dual layer disc with two recording/reproduction sides.

"Unknown PAC Rules" may be used to control a number of areas on a disc. For example, "Unknown PAC Rules" can indicate recording controllability on Disc Management Area (DMA) zones (which may or may not include a Disc Definition Structure (DDS) in the INFO 1, 2, 3 and/or 4 zone, can indicate recording controllability on the Spare Areas in the Data Zone, can indicate recording and/or reproducing controllability on the Control Data (CD) Zone in the INFO1, 2, 3, and/or 4 zones, can indicate recording and/or reproducing controllability on the User Data Area in the Data Zone, and/or can indicate recording and/or reproducing controllability on the "PAC cluster" in the INFO1 and/or 2 zone.

The following example rule may be applicable to areas (except the "PAC cluster" area). In the case where the control type is write, for example, for Bits = b3, b5, b6, b7, etc., if an allocated bit is set to '0', this may be used to indicate an area relevant thereto is writable and if an allocated bit is set to '1', this may be used to indicate an area relevant thereto is not writable.

In the case where the control type is read, for example, for Bits = b2, b4, etc., if an allocated bit is set to '0', this may be used to indicate an area relevant thereto is readable, and if an allocated bit is set to '1', this may be used to indicate an area relevant thereto is not readable. With regard to the "PAC cluster" zone, in a case where the control type is write (Bits = b1), and if an allocated bit is '0', this may be used to indicate that overwrite on the present PAC is possible or status bits of a Disc Definition Structure (DDS) is changeable. If an allocated bit is '1', this may be used to indicate overwrite on the present PAC is not possible or status bits of the DDS are not changeable. The DDS will be described in more detail below.

Also, with regard to the "PAC cluster" zone, in a case where the control type is read (Bits = b0), and if an allocated bit is '0', this may be used to indicate that the "PAC cluster" zone is readable and contents of the present cluster are transferable externally (for example, to a host or other similar device) of a drive. If the allocated bit is '1', this may be used to indicate that contents (so called known rule) of the present PAC cluster are not transferable except the first 384 bytes (a header) of a first data frame, which is settable only when it is intended to control the disc by an unknown rule.

In an example of the User Data Area, if a segment area which is a "special" area on the disc (which is described below) is defined, the User Data Area may be used as a field for indicating recording and/or reproducing controllability on the segment area, and not necessarily the entire User Data Area.

Write controllability is applicable only to re-writable discs BD-RE and BD-R and the write controllability of a replacement area for a defective area is also applicable to the re-writable discs BD-RE and BD-R. As a result, various example features of the present invention may depend on the re-writable characteristics of the high density (optical) disc.

Using the above technique, the "Unknown PAC Rules" field enables designation of a controllable area on the disc for a drive with a version mismatch. Moreover, the above technique may also be applicable to control access to a particular physical area on a disc at a user's option.

Returning to Fig. 4, the "PAC Update Count" field in FIG. 4, may indicate a number of the PAC updates, may have '0' written initially, and/or may be incremented by one every time the PAC is re-written.

Further, in Fig. 4, the "Entire Disc Flag" field may be used as a field for indicating that the PAC is applicable to an entire area of the disc and the "Number of Segments" field is a field that may represent a number of segment areas to which the PAC is applicable.

In an example, even in the case of b0 = 0 when re-initialization is allowed, if writing is not allowed by another write inhibition mechanism (for an example, a write protect (WP) flag of DDS), the initialization is inhibited. That is, the "Entire Disc Flag" may be operative in an OR-function with other write inhibition mechanisms.

The "Entire Disc Flag" field can be used as a field applicable, not only to a case of an unknown PAC, but also to a case of a known PAC. That is, allowability of re-initialization of even a known PAC which understands the PAC_ID enabling to apply the known rule may be controlled through the "Entire Disc Flag" field.

In another example, without providing the "Entire Disc Flag" field as described above, it may also be possible that the allowability of re-initialization may be indicated with one extra bit (for example, of the 32 bits of the "Unknown PAC Rule" field) as a "re-initialization flag" for indicating the allowability of re-initialization.

Moreover, it should be apparent that functions of the "Entire Disc Flag" field are not limited to flag named as such. As is clear, the function of the "Entire Disc Flag" field is applicable to the re-initialization of a PAC, and the field may be identified as a "Initialization bit of PAC" field.

Further, in Fig. 4, the "Number of Segments" field is a field that may represent a number of segment areas to which the PAC is applicable.

In an example embodiment, a maximum number of segments may be allocatable to one PAC. In an example embodiment, a maximum number of 32 segments can be allocated to one PAC and information on the allocated segments may be written in "Segment_0" to "Segment_31" fields, each including 8 bytes. Each of the "Segment_0~31" fields may include the first physical sector number (PSN) and the last PSN of the allocated segment area recorded thereon.

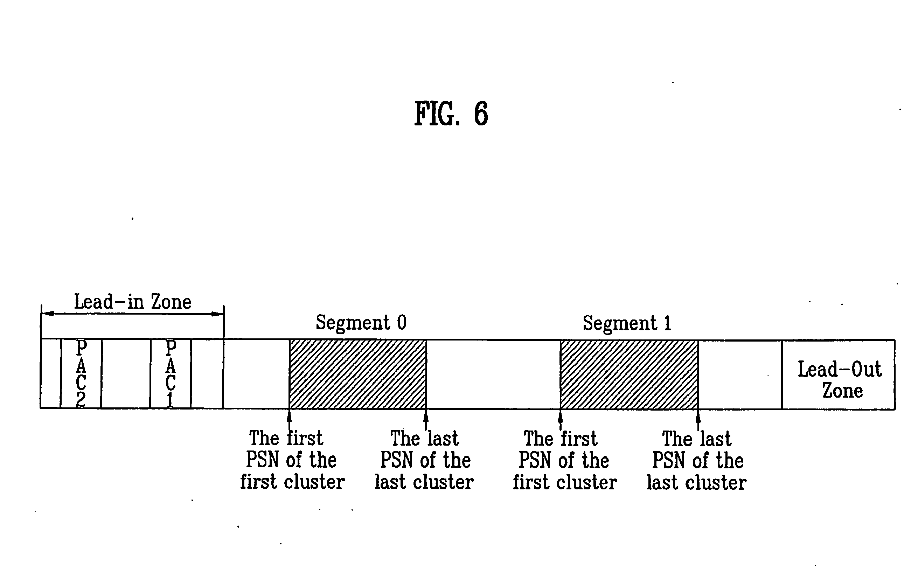

Segments are described in more detail below. FIG 6 illustrates segment zones on a high density optical disc in accordance with an example embodiment of the present invention. Referring to FIG. 6, if required, there may be a maximum number (for example, 32) of segment areas on the high density optical disc, for applying the PA-C thereto. The maximum number of segment area may start from "segment 0".

Up to the maximum number of segments can be allocated starting from "segment 0" in an ascending order for management by one PAC, and even if there are a plurality of PACs, total number of the segment areas managed by the PACs should not exceed the maximum number of segments.

In an example, positions of the segment areas may be identified by an optical disc drive by writing the first PSN, which may indicate a starting position of the allocated segment area and the last PSN which may indicate the last position of the allocated segment area on "Segment" fields.

In an example arrangement, none of the plurality of allocated segments need overlap and the starting and ending positions may be designated at boundaries of clusters.

Thus, in example embodiments, the present invention may provide a plurality of PACs, to manage a number (for example, 32) segment areas, which are described in more detail below.

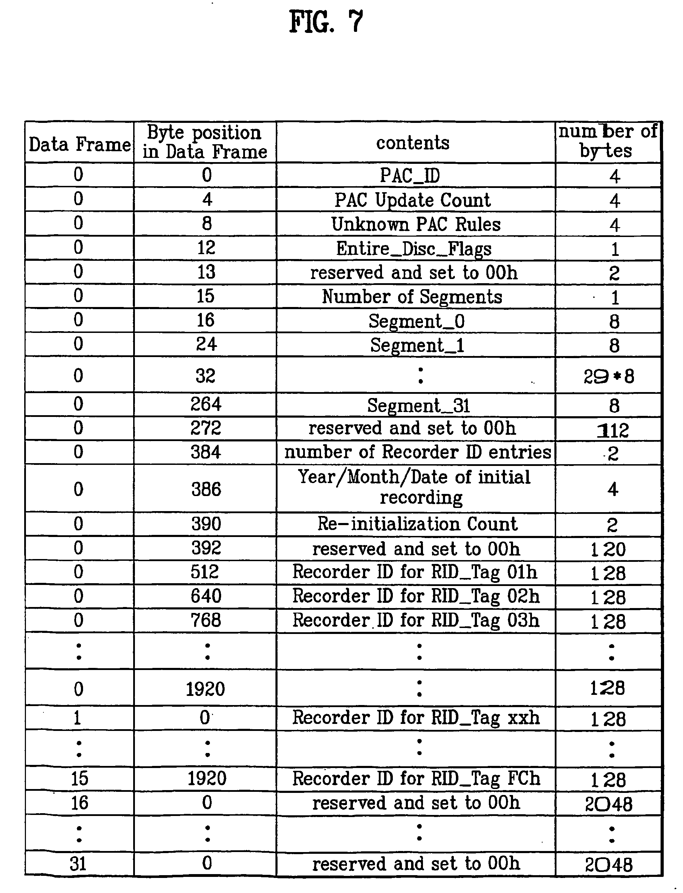

FIG 7 illustrates a PAC zone on a high density optical disc in accordance with an example embodiment of the present invention.

Referring to FIG 7, a "Primary PAC" may include 4 bytes of "PAC_ID", 4 bytes of "PAC Update Count", 4 bytes of "Unknown PAC Rules", 1 byte of "Entire_Disc_Flags", 1 byte of "number of Segments", a total of 32 "Segment_0 ~ Segment_3 1" each with 8 bytes, 2 bytes of "number of Recorder ID entries", 4 bytes of "Year/Month/Date of initial recording", 2 bytes of "Re-initialization Count", and/or a plurality of "Recorder ID for RID_Tag xxh" fields each with 128 bytes.

The "number of Recorder ID entries", the "Year/Month/Date of initial recording", the "Re-initialization Count", and the "Recorder ID for RID_Tag xxh" fields of the "Primary PAC" may be referred to as a "known rule", which is PAC specific Info characterizing a "Primary PAC". A "Primary PAC" having such a structure is discussed below.

As described above, the "PAC_ID" field may be used as a field for providing a status and identification code of the present PAC and be recorded in '50 52 4D 00h' for indicating the Primary PAC, specifically. '50 52 4D 00h' represents characters "PRM", and the last 00h bit indicates that a version of the Primary PAC is '0'.

The "PAC Update Count" field may be used to indicate a number of updates of the Primary PAC, may be written as 00h at the time of initialization, and may be incremented by one every time the Primary PAC is re-written.

The "Unknown PAC Rules" field is a field that may be used for designating an operation range of a drive that does not understand the Primary PAC identified by "PAC_ID" having a structure as shown in FIG 5, and may be set to control the DMA area, the spare area, the control data area, the user data area, the PAC cluster area, and/or other similar data.

The "Entire_Disc_Flags" field of the Primary PAC may be set to 00h for allowing initialization, and, if no segment area is allocated, the "number of Segments" field, and the "Segment_i" fields may be set to 00h.

The "number of Recorder ID entries" field is a field that may be used to indicate a number of recorder IDs of 128 byte size and/or a maximum allowable number in the Primary PAC of 252.

The "Year/Month/Date of initial recording" field is a field that may be used for recording a

Year, a Month, and a date of initial recording of the disc thereon and the "Re-initialization Count" field is a field that may be used for indicating a number of re-initialization of the disc. The "Recorder ID for RID_Tag xxh" field is a field having 128 bytes allocated thereto that may be used for recorder ID information for recording drive signatures of all recorders thereon. The 128 bytes of drive signature may include 48 bytes of a manufacturer's name, 48 bytes of additional identification information, and/or 32 bytes of serial number.

In another example, there may be a plurality of PACs, so that the plurality of PACs manage the entire disc or segment areas which can be allocated up to a maximum (for example, 32), which will be described in more detail below.

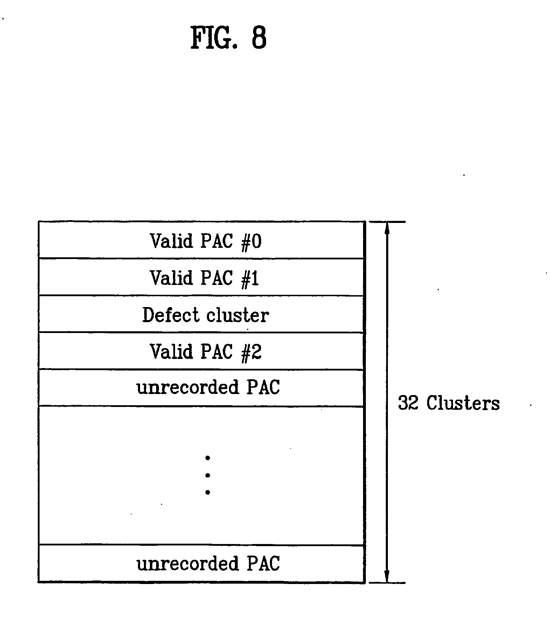

FIG 8 illustrates a PAC zone on a high density optical disc in accordance with an example embodiment of the present invention.

Referring to FIG 8, a plurality of valid PACs, each of the same cluster size, may be written on one PAC zone (a PAC zone of INFO2 or INFO1), each with 32 clusters.

As described above, a valid PAC may be defined as a zone containing the various kinds of PAC information and a maximum number (for example, 32, or 64 in the case of a dual layer disc) of valid PACs may be provided on a disc, each with one cluster size that can be allocated to one PAC zone.

As described above, the valid PAC may have a PAC_ID (for example, PAC_ID = 54 53 54 00h) selected in advance according to a drive version of the optical disc having the PAC recorded thereon, and a remainder of the PAC zone may have a PAC of FF FF FF FFh recorded thereon if the PAC_ID is 00 00 00 00h, and the PAC zone not recorded yet is sti 11 an unrecorded PAC zone.

A remainder of the PAC zone having no valid PACs recorded thereon may have a PAC with a PAC_ID of 00 00 00 00h or FF FF FF FFh, and a PAC zone having nothing record thereon may be left as an unrecorded PAC.

In an example embodiment, if a defect occurs at one PAC zone the PAC is to be written thereon, the PAC may be written at an area next to the defective area. The defect may be caused by damage to; or contamination of a disc surface, and when the defect occurs at the area the PAC is to be written thereon, the PAC information may be written on an area next to the defective area.

Operations such as finding a position of a valid PAC zone from the PAC zone or finding a position of a next writable PAC zone while avoiding an area written already to require no more writing, and defective area from above PAC zone may an important matter in view of initialization and recording speed of the disc and many retries may be required for reading a defective area.

In an example embodiment, the present invention describes a method in which status information on positions of the plurality of valid PACs, a position of the next writable PAC, and/or other relevant information may be written on a DDS (Disc Definition Structure).

A DDS may be a zone containing information on the first PSN of a defect list, a position of a user data zone, sizes of spare areas, and/or other relevant information, and may be information written on the DMA zone of the disc as information on DMS (Defect Management Structure) together with DFL (Defect List).

The information written in the DMA may be information scanned and pre-loaded in advance when the disc is loaded into a drive. Therefore, once various status information on the PAC, such as positions of the plurality of valid PACs, a position of the next writable PAC, and/or other relevant information is written in the DDS as pointers, the optical disc drive may obtain information on the PAC zone without needing to scan all the PAC zones.

A DDS may include various kinds of information on status of the PAC zone and will be described below.

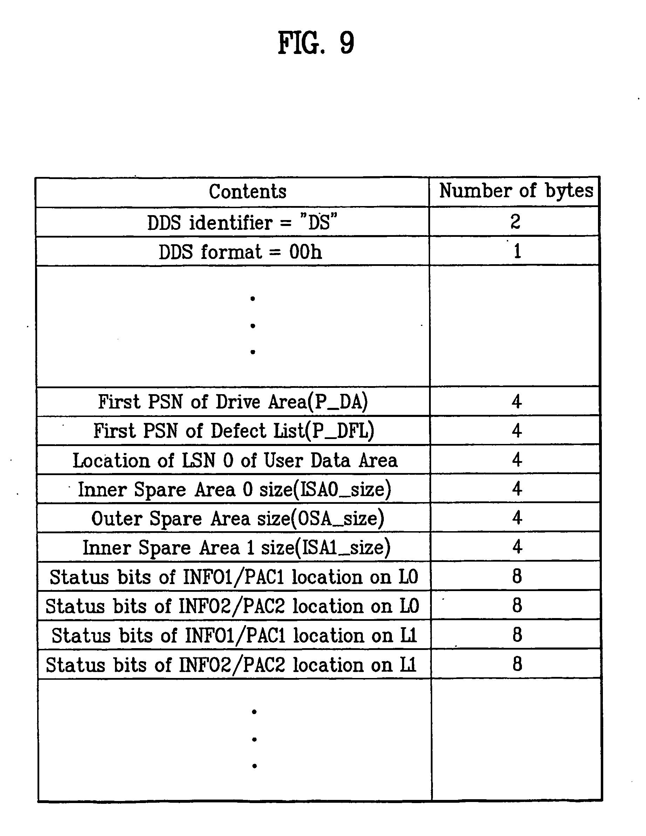

FIG 9 illustrates a DDS on a high density optical disc in accordance with an example embodiment of the present invention.

FIG 9 illustrates a diagram showing an example embodiment of a DDS on a high density optical disc in accordance with an example embodiment of the present invention. The example embodiment of FIG 9 illustrates a dual layer disc, but the teachings of FIG 9 are equally applicable to a single layer disc.

Referring to FIG 9, the DDS may include a "DDS identifier" field, a "DDS format" field, a "First PSN of Drive Area (P_DA)" field representing the first physical sector number of a drive area, a "First PSN of Defect List (P_DFL)" field representing the first PSN of the defect list, a "Location of LSN 0 of User Data Area" field representing a position of an LSN (logical sector number) of the user data area, an "Inner Spare Area 0 size (ISA0_size)" field representing a size of an inner spare area 0, an "Outer Spare Area size (OSA_size)" field representing a size of an outer spare area 0, an "Inner Spare Area 1_size (ISA1_size)" field representing a size of an inner spare area 1, a "Status bits of INFO1/PAC1 location on L0" field having status information on the PAC1 in the INFO1 zone of the first recording layer L0 recorded thereon, a "Status bits of INFO2/PAC2 location on L0" field having status information on the PAC2 in the INFO2 zone of the first recording layer L0 recorded thereon, a "Status bits of INFO1/PAC1 location on L1" field having status information on the PAC1 in the INFO1 zone of the second recording layer L1 recorded thereon, and/or a "Status bits of INFO2/PAC2 location on L1" field having status information on the PAC2 in the INFO2 zone of the second recording layer L1 recorded thereon.

As indicated in the above example, the DDS may provide various status information on the PAC, such as a position of cluster having valid PAC allocated thereto, the next writable area, and/or other similar information.

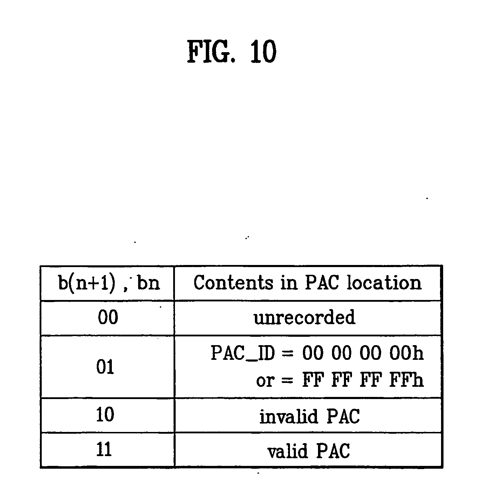

An example of PAC status information of a PAC zone in accordance with an example embodiment of the present invention is described in more detail with reference to FIG 10. Referring to FIG 10, two bits (for example) may be allocated to each field provided for indicating status information of the PAC zone recorded on the DDS. In the example of FIG 10, 00 indicates that the PAC cluster is unrecorded, 01 indicates that the PAC cluster has a PAC with a PAC_ID = 00 00 00 00h, or PAC_ID = FF FF FF FFh recorded thereon, 10 indicates that the PAC cluster is an invalid PAC (for example, due to a defect), and 11 indicates that the PAC cluster is a valid PAC.

A defect is not the only reason a PAC cluster may be identified as invalid. For example, when the PAC cluster is not readable due to "unknown PAC Rules" too, the PAC cluster may also be identified as an invalid PAC, with 10. That is, as described above, the bit b0 of "Unknown PAC Rule" may be used as a bit for indicating if the PAC cluster is readable, wherein even if the PAC cluster is re-writable in a case where the bit is set to 1, the PAC cluster is indicated as an invalid PAC.

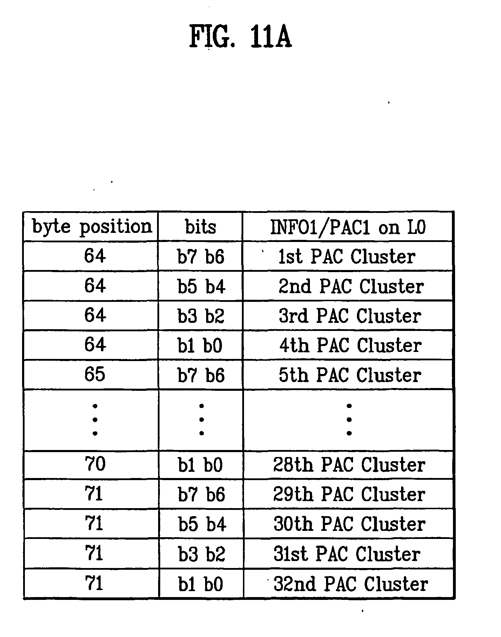

Another example of PAC status information of a PAC zone in accordance with an example embodiment of the present invention is described in more detail with reference to FIGs. 11A - 11D, which each illustrate structures showing a PAC status information field of a DDS which indicate status information of a PAC zone

FIG 11A illustrates a structure of "Status bits of INFO1/PAC1 location on L0" field for indicating status information of the PAC1 zone designated to the INFO1 zone of the first recording layer L0.

Referring to FIG 11A, the "Status bits of INFO1/PAC1 location on L0" field may have a total 8 bytes (64 bits) allocated thereto starting from a byte position of 64 (for example) to a byte position of 71 (for example), wherein by indicating status information with two bits for each of PAC clusters, information on a total number (for example, 32) of PAC clusters may be indicated.

Accordingly, for example, if bits b7 - b6 are 11 at a 64 byte position, this may be used to indicate that the first PAC cluster in the PAC1 zone on the first recording layer has a valid PAC. Also, if bits b5- b4 are 01 at a 64 byte position (for example), this may be used to indicate that the second PAC cluster in the PAC1 zone on the first recording layer has a PAC_ID = 00 00 00 00h or PAC_ID = FF FF FF FFh, indicating that the PAC cluster has a writable PAC.

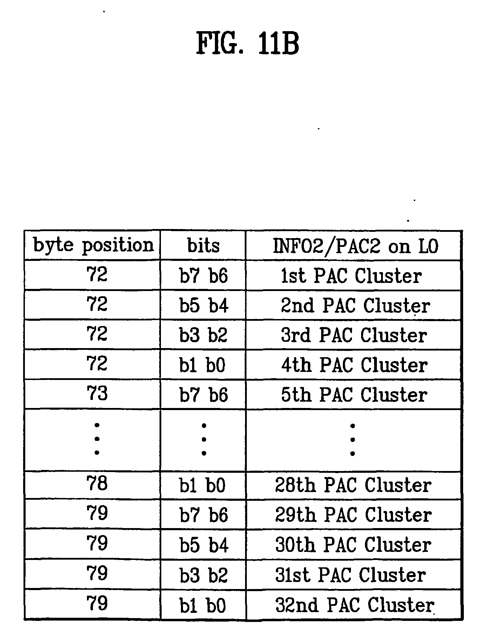

Also, the "Status bits of INFO2/PAC2 location on L0" field may be recorded by the same method for the PAC2 zone on the INF02 zone on the first recording layer, which is shown in FIG 11B.

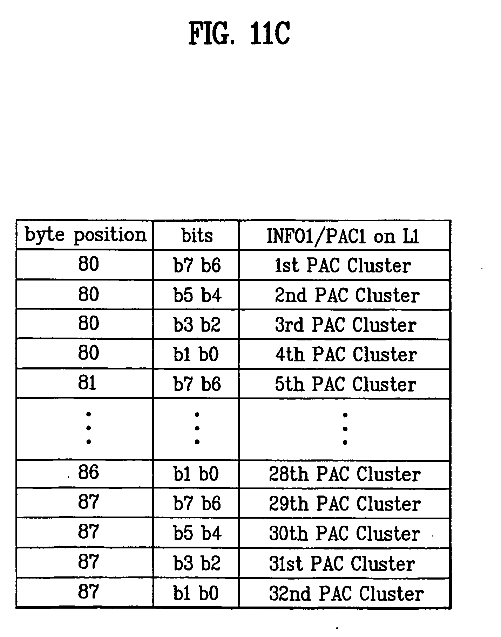

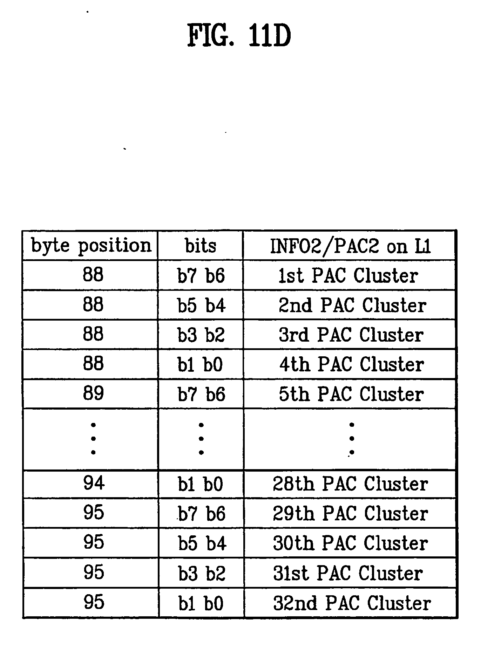

FIG 11C illustrates an example structure of a "Status bits of INFO1/PAC1 location on L1" field having status information on a PAC1 in the INFO1 zone of the second recording layer L1, and FIG. 11D an example structure of a "Status bits of INFO2/PAC2 location on L1" field having status information on a PAC2 in the INFO2 zone of the second recording layer L1, wherein information on the PAC cluster is indicated as described above.

In example embodiment, characteristics of a PAC of the present invention can be summarized as follows.

In valid PACs, there may be "Unknown PAC" and "Known PAC" depending on whether the valid PAC understands a PAC_ID, or not, wherein the "Unknown PAC" has recording and/or reproducing control information on certain areas on the disc (for example, the DMA area, the spare area, the user data area, the PAC cluster, and/or other similar areas). The recording and/or reproducing control information on the user data area may be used as recording and/or reproducing control information on the segment area, if the segments are allocated to the user data area.

The "Known PAC" may include specific information, specific to the PAC, and a "Primary PAC" may be defined as a type of "Known PAC", having disc initialization date information, recorder ID information, and/or other similar information.

A PAC zone may have a plurality of valid PACs designated thereto and the status of various PAC of the PAC zone may be recorded in a DDS.

Initialization of a re-writable high density optical disc (BD-RE) is likely. Disc initialization and preparation for using the disc again may include formatting a DMS area and a PAC and scanning and certifying to update Defect List (DFL) information. Because updating the DFL information is an option, initialization as defined in the present invention may also include formatting or reformatting.

Initialization of a re-writable high density optical disc (for example, BD-RE) as defined in the present invention is intended to include re-initialization, formatting, and ref-formatting. For the initialization of a re-writable high density optical disc (for example, BD-RE), it may be necessary to first verify if an inserted disc can be initialized. Verification of whether the disc can be initialized can be made using the "Entire disc Flags" field (which may also be termed an "initialization bit of PAC") and/or a disc recording inhibition mechanism (for an example, a write protect (WP_flag) of a DDS). In an example, if a bit, b0 of the "Entire disc Flags" field is set (for example, to '1') or if the recording inhibition mechanism inhibits the recording on the disc, initialization is not permitted.

In a case where the "Entire disc Flags" field that indicates if the initialization is allowed or not is applicable to a "Known PAC", the "Known PAC" can be initialized if the "Entire disc Flags" field allows initialization.

In a case where the disc is controlled by an unknown PAC, initialization may not be possible if the "Unknown PAC Rule" inhibits recording on a data zone.

In a case where a disc can be initialized, various, example embodiments for initializing (or reinitializing, formatting, or re-formatting) a high density optical disc according to example embodiments of the present invention are described below.

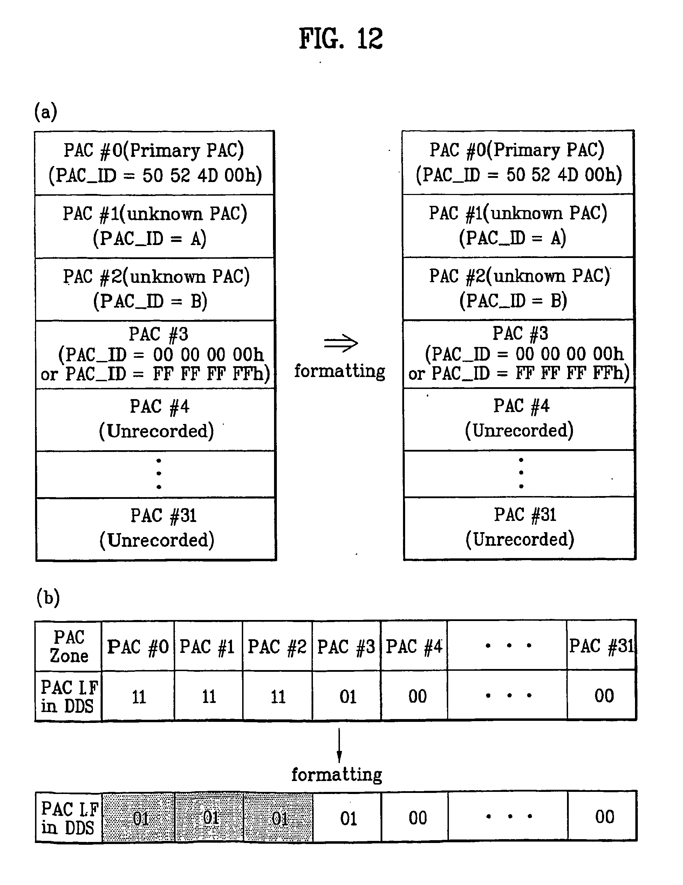

FIGs. 12A-12B illustrate a technique for initializing a PAC in accordance with an example embodiment of the present invention, wherein FIG 12A illustrates changes of the PAC zone following initialization of the PAC and FIG 12B illustrates a technique for recording in a DDS area, PAC related status information following initialization of the PAC.

Referring to FIGS. 12A and 12B, in an example initialization method, the PAC zone is left as is, and only the DDS PAC related status information is changed.

That is, as shown in FIG 12B, only DDS information that represents status information on the PAC zone is changed to a next writable state. For an example, bits 11 that indicate position information of the valid PAC are changed to bits 01 to indicate that a PAC zone is a next writable PAC zone, and bits 01 or bits 00 that indicate an original writable area is maintained as is.

Without separate initialization of the PAC zone, this example technique enables a comparatively simple PAC zone initialization process by changing only the DDS information to identify an entire PAC zone as a writable area. A method of initialization by DDS information change, without physical initialization of the PAC zone, such as the example described above, may be referred to as logical initialization (or a logical format).

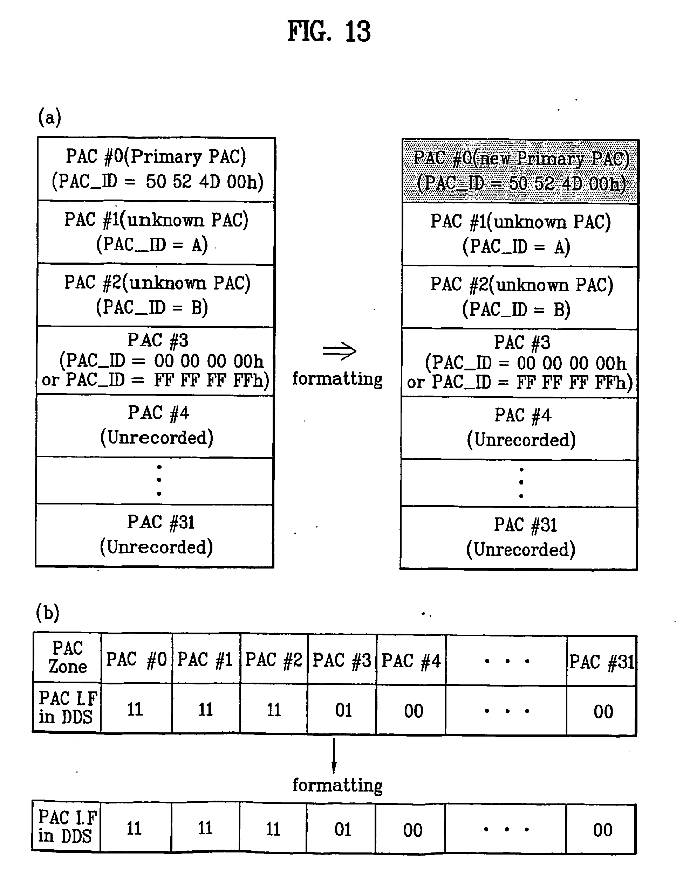

FIGs. 13A-13B illustrate a technique for initializing a PAC in accordance with another example embodiment of the present invention.

Referring to FIGs. 13A-13B, the "Known PAC" including the "Primary PAC" is initialized and the "unknown PAC" is left as is. As described, initialization of a "Primary PAC" which may be considered a type of "Known PAC" may be possible because the "Entire disc flag" may be set to "0" (discussed below).

When there is no "Primary PAC" on the disc, the disc may be initialized by setting the "PAC Update Count" field and the "Re-initialization Count" field to '0' at the "Primary PAC", to produce a new "Primary PAC". In this case, a Year/Month/Day of recording initialization may be recorded on the "Year/Month/Day of initial recording" field, and the recorder ID at the time of initialization may be recorded on the "Recorder ID for RID_Tag01" field.

If there is a "Primary PAC" on the disc, the new "Primary PAC" increments a "PAC Update Count" field value by one and sets the Year/Month/Day of recording initialization on the "Year/Month/Day of initial recording" field. Moreover, all the recorder ID lists recorded already are erased, and a recorder ID of initial recording may be recorded on the "Recorder ID for RID_Tag01" field, and the "Re-initialization Count" field may be incremented by one. If the "Primary PAC" is initialized by an above method, while the unknown PAC" is left as is, all information on a valid PAC in the DDS remains intact, as shown in FIG 13B.

An "Unknown PAC" may be left as is at the time of disc initialization because the PAC has information not only on the user area, but also other areas (for example, the DMA area, the spare area, the control data area, and/or other similar areas) on the disc. As a result, initialization leaving the "Unknown PAC" as is, regardless of user data, is possible.

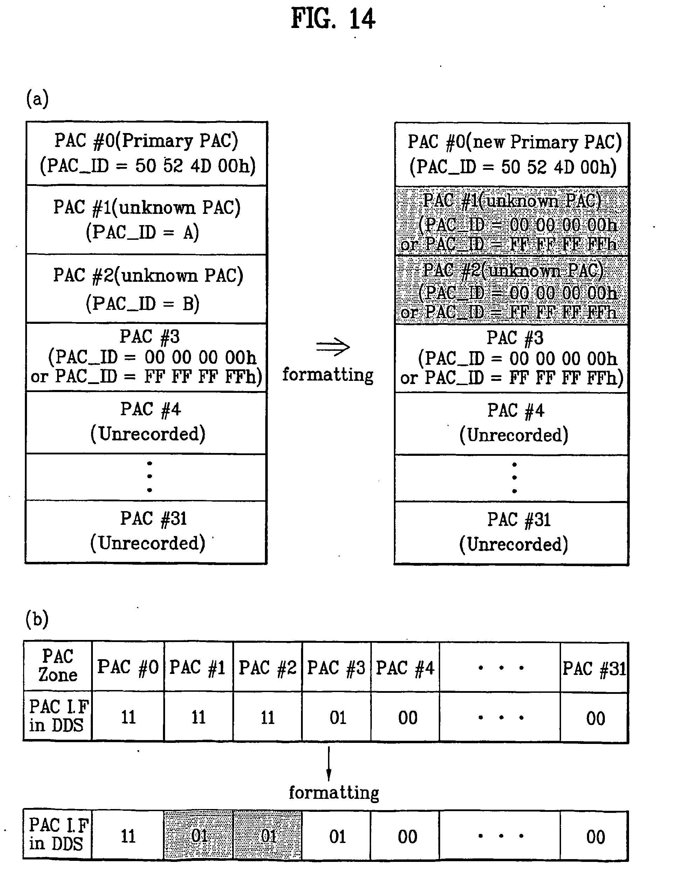

FIGs. 14A-14B illustrate a technique for initializing a PAC in accordance with another example embodiment of the present invention.

Referring to FIGs. 14A-14B, both the "Known PAC" and the "Unknown PAC" may be initialized, including the "Primary PAC".

Accordingly, referring to FIG. 14A, both an "Unknown PAC" with a PAC_ID = A (where "A" is an arbitrary designator), and an "Unknown PAC" with a PAC_ID = B (also an arbitrary designator) are initialized into next writable areas PAC_ID = 00 00 00 00h or PAC_ID = FF FF FF FFh. The "Primary PAC" may be initialized, for example, using the technique shown in FIGs. 13A-13B.

Referring to FIG 14B, bits 11 may be used to indicate a valid PAC of the "Unknown PAC" and PAC related information of the DDS may be changed to 01.

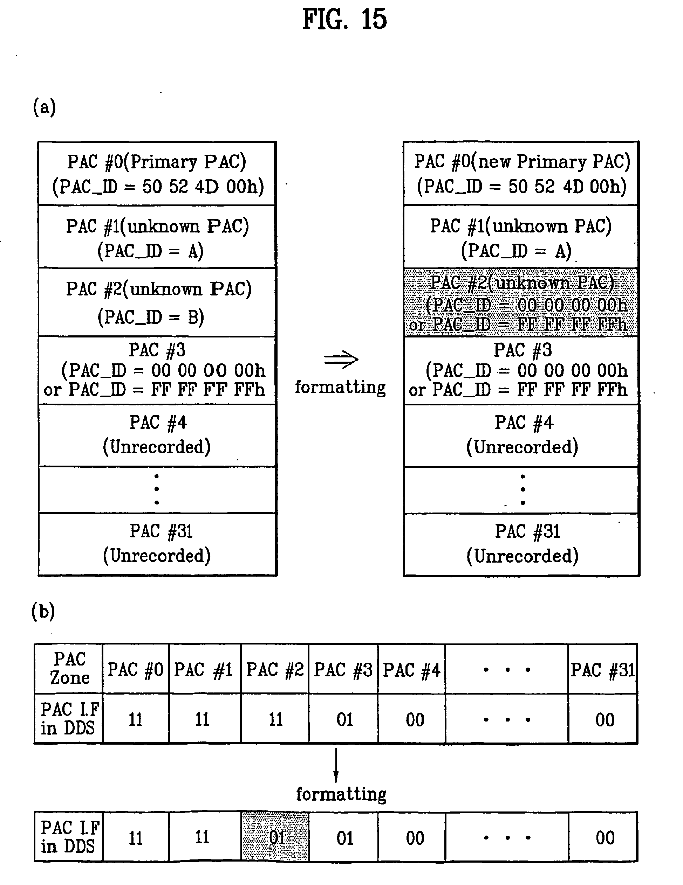

FIGs. 15A-15B illustrate a technique for initializing a PAC in accordance with another example embodiment of the present invention.

Referring to FIGs. 15A-15B, similar to FIGs. 14A-14B, both the "Known PAC" and the "Unknown PAC" may be initialized, including the "Primary PAC", while accounting for bit b1 of the "Unknown PAC Rule" into account.

That is, as described above, if bit b1 of the "Unknown PAC Rule", a recording control bit for the PAC cluster area, is set to 1 (for example), to inhibit rewriting on the PAC cluster, initialization of the "Unknown PAC" is inhibited, and if bit b1 of the "Unknown PAC Rule" is set to 0 (for example), to allow rewriting on the PAC cluster, initialization of the unknown PAC" is made possible.

Therefore, if it is desired to leave an "Unknown PAC" as is, regardless of the User data, it is possible to leave the "Unknown PAC" as is by using bits b1, and, for the "Unknown PAC" to be left as is, DDS information is left as 11 as a valid PAC.

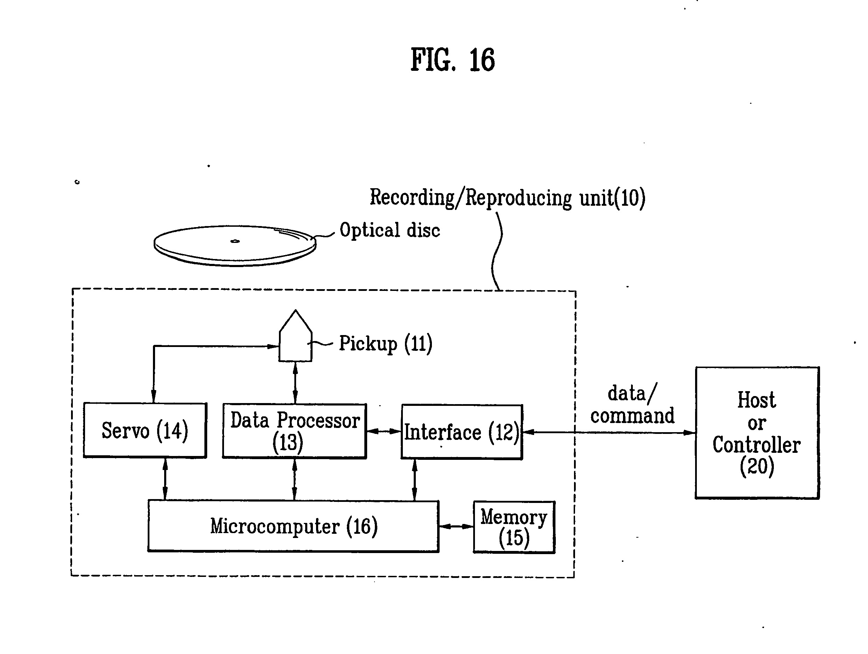

FIG. 16 illustrates a block diagram of an optical recording/reproducing apparatus in accordance with an example embodiment of the present invention.

Referring to FIG 16, the optical recording/reproducing apparatus may include a recording/reproducing device 10 for perfonning recording/reproduction on the optical disc and a host, or controller 20 for controlling the recording/reproducing device 10. In an example embodiment, the recording/reproducing device 10 may act as the "optical disc drive" discussed above in conjunction with many example embodiments of the present invention.

In an example embodiment, the host 20 gives a writing or reproduction instruction to write to or reproduce from a particular area of the optical disc to the recording/reproducing device 10, and the recording/reproducing device 10 performs the recording/reproduction to/from the particular area in response to the instruction from the bost 20.

The recording/reproducing device 10 may further include an interface part 12 for performing communication, such as exchange of data and instructions with the host 20, a pickup part 11 for writing/reading a data to/from the optical disc directly, a data processor 13 for receiving a signal from the pickup part 11 and recovering a desired signal value or modulating a signal to be written into a signal able to be written on the optical disc, a servo part 14 for controlling the pickup part 11 to read a signal from the optical disc accurately or to write a signal on the optical disc accurately, a memory 15 for temporary storage of various kinds of information including management information and data, and a microcomputer 16 for controlling various parts of the recording/reproducing device 10.

An example method for recording a PAC on a high density writable optical disc using the example optical recording/reproducing apparatus will be described below.

Upon inserting the optical disc into the optical recording/reproducing apparatus, management information may be read from the optical disc and stored in the memory 15 of the recording/reproducing device 10, for use at the time of recording/reproduction of the optical disc.

In this state, if the user desires to write on a particular area of the optical disc, the host 20, taking this as a writing instruction, provides information on a desired writing position to the recording/reproducing device 10, together with a data to be written.

The microcomputer 16 in the recording/reproducing device 10 may receive the writing instruction, determine if the area of the optical disc the host 20 desires to write is a defective area or not from the management information stored in the memory 15, and/or perform data writing according to the writing instruction from the host 20 on an area which is not a defective area.

If it is determined that writing on an entire disc or on a particular area of the disc includes new features which a previous version of the recording/reproducing device is not provided with, leading the previous version of the recording/reproducing device to fail to sense, or if it is intended to restrict functions, such as writing or reproducing to/from a particular area of the disc according to restriction set by the user, the microcomputer 16 of the recording/reproducing device 10 may write control information of the area in the PAC zone on the disc as an "Unknown PAC rule". The microcomputer 16 of the recording/reproducing device 10 may also write PAC information, such as the PAC_ID for a written state, and segment information which is control information on the particular area of the disc. Moreover, the microcomputer 16 of the recording/reproducing device 10 may also write a PAC_ID and segment information on a particular area of the disc as PAC information. The recorder ID information may be recorded on the "Recorder ID for RID_Tag of the "Primary PAC".

PAC information may be written in a plurality of valid PACs on the PAC 1 zone of the INFO 1 zone as required at a one cluster size and a copy of the PAC recorded on the PAC1 zone may be written on the PAC2 zone of the INFO 2 zone as a backup.

The microcomputer 16 may provide position information of the area the data is written thereon, or the PAC zone, and the data to the servo 14 and the data processor 13, so that the writing is finished at a desired position on the optical disc through the pickup part 11. Initialization of a high density optical disc having a PAC recorded thereon by the above-described method may be performed as described above under the control of the microcomputer 16 of the recording and reproducing device 10. In an example embodiment, an "Unknown PAC" may be initialized when a cluster having the PAC recorded thereon is writable and initialization of the "Primary PAC" of the "Known PAC" may be made by recording information on a recorder ID and date of the initialization, and updating related count information.

In another example embodiment, a method for recording to and/or reproducing from a high density optical disc having a PAC written thereon will be described.

Upon inserting an optical disc into the optical recording/reproducing apparatus, management information may be read from the optical disc and stored in the memory 15 of the recording and reproducing device 10, for use at the time of recording and reproduction of the optical disc.

The information in the memory 10 may include position information of various zones included in the PAC zone on the disc. Particularly, positions of valid PACs in the PAC zone may be known from disc definition structure (DDS) information. After positions of the valid PACs are known, a PAC_ID field of the PAC may be examined, for verifying if the PAC_ID is an identifiable PAC_ID.

If the PAC_ID is identifiable, the method determines that a recording and reproducing device having written the data on the disc has a version identical to a version of the present recording and reproducing device or there are no separate writing/reproduction restrictions, and the recording/reproduction is performed according to the instruction from the host 20.

If the PAC_ID is not identifiable, determining that it is a case when there are recording and reproducing restrictions for entire disc or a segment area, the recording/reproduction may be performed according to an instruction from the host 20 from with reference to recording/reproduction restriction areas on the disc written as the "Unknown PAC rule" and/or the "Segment".

The microcomputer 16 may then provide the location information and data according to the instruction from the host to the servo 14 and the data-processor 13, so that the recording/reproduction is finished at a desired location on the optical disc through the pickup part 11.

As described above, the methods and apparatus for recording and reproducing in a high density optical disc according to example embodiments of the present invention may have one or more of the following advantages.

First, the various embodiments of updating a PAC zone and DDS information related thereto permits effective initialization of a high density optical disc.

Second, various embodiments for recording/reproducing data using a PAC permits effective data recording/reproduction to/from a high density optical disc.

## Claims

1. A rewritable recording medium having a data structure for managing an access to the recording medium, comprising:
at least one physical access control (PAC) zone including at least one physical access control (PAC) cluster, the at least one PAC cluster storing PAC information, the PAC information managing recording to and/or reproducing from the recording medium, the PAC information including a PAC identification field providing an identification code of the PAC cluster, and a PAC rules field designating applicable operations of a drive that cannot recognize the identification code of the PAC cluster when the drive attempts to access to the recording medium; and
at least one area storing status information for the at least one PAC clusters, the status information indicating a status of each of the PAC clusters as unrecorded, available for re-use, invalid, or valid, the status information changing upon reformatting of the recording medium, wherein the status information indicates that the at least one PAC clusters which was valid prior to reformatting is set to be available for re-use, after reformatting.

2. The recording medium of claim 1, wherein the status information changes for each of the at least one PAC clusters based on a status of each of the at least one PAC clusters.

3. The recording medium of claim 2, wherein the status information changes for each of the at least one PAC clusters depending on whether each of the at least one PAC clusters is known or unknown to a drive attempting to access the recording medium.

4. The recording medium of claim 1, wherein at least one of the PAC clusters is unknown to a drive attempting to access to the recording medium.

5. The recording medium of claim 4, wherein the at least one unknown PAC cluster includes the PAC rules to be used when the PAC cluster is unknown to the drive.

6. The recording medium of claim 5, wherein the PAC rules control access to all of the at least one unknown PAC cluster

7. The recording medium of claim 6, wherein the status information changes for each of the at least one unknown PAC clusters depending on the PAC rules.

8. A method of reproducing data from a rewritable recording medium having a data structure for managing a data area of the recording medium, comprising:
reading status information from a management area, the status information indicating a status of each PAC cluster within a PAC zone as unrecorded, available for re-use, invalid or valid, the status information changing upon reformatting of the recording medium, wherein the status information indicates that a PAC clusters which was valid prior to reformatting is set to be available for re-use, after reformatting; and
reading at least one physical access control (PAC) information from at least one PAC cluster based on the Status information the PAC information managing recording to and/or reproducing from the recording medium, the PAC information including a PAC identification field providing an identification code of the PAC cluster, and a PAC rules field designating applicable operations of a drive that cannot recognize the identification code of the PAC cluster when the drive attempts to access to the recording medium.

9. The method of claim 8, wherein the status information changes for each of the at least one PAC clusters based on a status of each of the at least one PAC clusters.

10. The method of claim 9, wherein the status information changes for each of the at least one PAC clusters depending on whether each of the at least one PAC clusters is known or unknown to a drive attempting to access the recording medium, wherein the identification code of the at least one PAC cluster is recognized or not recognized by the drive, respectively.

11. The method of claim 9, wherein at least one of the PAC clusters is to attempting access to recording unknown to a drive attempting to access to the recording medium, wherein the identification code of the at least one PAC cluster is not recognized by the drive.

12. The method of claim 11, wherein the at least one unknown PAC cluster includes the PAC rules to be used when the PAC cluster is unknown to the drive.

13. The method of claim 12, wherein the PAC rules control access to all of the at least one unknown PAC cluster.

14. The method of claim 13, wherein the status information changes for each of the at least one unknown PAC clusters depending on the PAC rules.

15. An apparatus for reproducing data from a rewritable recording medium, comprising:
a pick-up(11) configured to read data from the recording medium; and
a controller(16) configured to control the pick-up(11) to read status information from a management area, the status information indicating a status of each PAC cluster within a PAC zone as unrecorded, available for re-use, invalid or valid, the status information changing upon reformatting of the recording medium, wherein the status information indicates that a PAC clusters which was valid prior to reformatting is set to be available for re-use, after reformatting, and
to read at least one physical access control (PAC) information from at PAC PAC information managing recording to least one PAC cluster , the PAC information managing recording to and/or reproducing from the recording medium, the PAC information including a PAC identification field providing an identification code of the PAC cluster, and a PAC rules field designating applicable operations of a drive that cannot recognize the identification code of the PAC cluster when the drive attempts to access to the recording medium.

16. The apparatus of claim 15, wherein the status information changes for each of the at least one PAC clusters based on a status of each of the at least one PAC clusters.

17. The apparatus of claim 16, wherein the status information changes for each of the at least one PAC clusters depending on whether each of the at least one PAC clusters is known or unknown to the drive, based on the status information.

18. The apparatus of claim 15, wherein at least one of the PAC clusters is unknown to a drive attempting to access to the recording medium, based on the status information.

19. The apparatus of claim 18, wherein the at least one unknown PAC cluster includes the PAC rules to be used when the PAC cluster is unknown to the drive.

20. The apparatus of claim 19, wherein the PAC rules control access to the at least one unknown PAC cluster.

21. The apparatus of claim 20, wherein the status information changes for the at least one unknown PAC clusters depending on the PAC rules.

22. The recording medium of claim 1, further comprising:
at least one backup PAC zone storing a copy of the PAC information.

23. The recording medium of claim 1, further comprising:
a data area storing user data,
wherein the PAC information specifies segments of the data area, and the starting and ending positions of the segments are designated at boundaries of clusters within the data area.

24. The recording medium of claim 23, wherein total number of the segments in the data area is less or equal to a maximum number.

25. The method of claim 8, further comprising:
reading a copy of the PAC information from at least one backup PAC zone of the recording medium.

26. The method of claim 8, wherein the recording medium further comprises a data area storing user data, the PAC information specifies segments of the data area, and the starting and ending positions of the segments are designated at boundaries of clusters within the data area.

27. The method of claim 26, wherein total number of the segments in the data area is less or equal to a maximum number.

28. The apparatus of claim 15, wherein the controller(16) controls the pick-up(11) to read a copy of the PAC information in at least one backup PAC zone of the recording medium.

29. The apparatus of claim 15, wherein the recording medium further comprises a data area storing user data, the PAC information specifies segments of the data area, and the starting and ending positions of the segments are designated at boundaries of clusters within the data area.

30. The apparatus of claim 29, wherein total number of the segments in the data area is less or equal to a maximum number.

31. A method of recording data on a rewritable recording medium, comprising:
recording at least one PAC information on the recording medium, the PAC information stored in at least one PAC cluster, the PAC information managing recording to and/or reproducing from the recording medium the PAC information including a PAC identification field providing an identification code of the PAC cluster, and a PAC rules field designating applicable operations of a drive that cannot recognize the identification code of the PAC cluster when the drive attempts to access to the recording medium; and
recording status information for the at least one PAC clusters on the recording medium, the status information indicating a status of each of the PAC clusters as unrecorded, available for re-use, invalid, or valid, the status information changing upon reformatting of the recording medium, wherein the status information indicates that the at least one PAC clusters which was valid prior to reformatting is set to be available for re-use, after reformatting.

32. The method of claim 31, further comprising:
recording a copy of the PAC information in at least one backup PAC zone of the recording medium.

33. The method of claim 31, further comprising:
recording user data in a data area of the recording medium,
wherein the PAC information specifies segments of the data area, and the starting and ending positions of the segments are designated at boundaries of clusters within the data area.

34. The method of claim 33, wherein total number of the segments in the data area is less or equal to a maximum number.

35. An apparatus for recording data in a rewritable recording medium, comprising:
a pick-up(11) configured to record data on the recording medium; and
a controller(16) configured to control the pick-up(11) to record at least one PAC information on the recording medium, the PAC information stored in at least one PAC cluster, the PAC information managing recording to and/or reproducing from the recording medium, the PAC information including a PAC identification field providing an identification code of the PAC cluster, and a PAC rules field designating applicable operations of a drive that cannot recognize the identification code of the PAC cluster when the drive attempts to access to the recording medium; and
to record status information for the at least one PAC clusters, the status information indicating a status of each of the PAC clusters as unrecorded, available for re-use, invalid, or valid, the status information changing upon reformatting of the recording medium, wherein the status information indicates that the at least one PAC clusters which was valid prior to reformatting is set to be available for re-use, after reformatting.

36. The apparatus of claim 35, wherein the controller(16) controls the pick-up(11) to record a copy of the PAC information in at least one backup PAC zone of the recording medium.

37. The apparatus of claim 35, wherein the controller (16) controls the pick-up (11) to record user data in a data area of the recording medium, and the PAC information specifies segments of the data area, and the starting and ending positions of the segments are designated at boundaries of clusters within the data area.

38. The apparatus of claim 37, wherein total number of the segments in the data area is less or equal to a maximum number.

## Patentansprüche

1. Wiederbeschreibbares Aufzeichnungsmedium mit einer Datenstruktur zum Verwalten eines Zugriffs auf das Aufzeichnungsmedium, das aufweist:
wenigstens eine physikalische Zugriffssteuerungs-(PAC-) Zone, die wenigstens einen physikalischen Zugriffssteuerungs- (PAC-) Cluster umfasst, wobei der wenigstens eine PAC-Cluster PAC-Informationen speichert, wobei die PAC-Informationen die Aufzeichnung auf dem und/oder die Wiedergabe von dem Aufzeichnungsmedium verwalten, wobei die PAC-Informationen ein PAC-Kennungsfeld, das einen Kennungscode des PAC-Clusters bereitstellt, und ein PAC-Regelfeld umfassen, das anwendbare Operationen eines Laufwerks bezeichnet, das den Kennungscode des PAC-Clusters nicht erkennen kann, wenn das Laufwerk versucht, auf das Aufzeichnungsmedium zuzugreifen; und
wenigstens eine Bereichsspeicherstatusinformation für den wenigstens einen PAC-Cluster, wobei die Statusinformation einen Status jedes der PAC-Cluster als unaufgezeichnet, für die Wiederverwendung verfügbar, ungültig oder gültig anzeigt, wobei die Statusinformation sich nach der Reformatierung des Aufzeichnungsmediums ändert, wobei die Statusinformation anzeigt, dass der wenigstens eine PAC-Cluster, der vor der Reformatierung gültig war, nach der Reformatierung als für die Wiederverwendung verfügbar festgelegt wird.

2. Aufzeichnungsmedium nach Anspruch 1, wobei die Statusinformation sich für jeden des wenigstens einen PAC-Clusters basierend auf einem Status jedes des wenigstens einen PAC-Clusters ändert.

3. Aufzeichnungsmedium nach Anspruch 2, wobei die Statusinformation sich für jeden des wenigstens einen PAC-Clusters abhängig davon ändert, ob jeder des wenigstens einen PAC-Clusters einem Laufwerk, das versucht, auf das Aufzeichnungsmedium zuzugreifen, bekannt oder unbekannt ist, wobei der Kennungscode des wenigstens einen PAC-Clusters von dem Laufwerk jeweils erkannt oder nicht erkannt wird.

4. Aufzeichnungsmedium nach Anspruch 1, wobei wenigstens einer der PAC-Cluster einem Laufwerk, das versucht, auf das Aufzeichnungsmedium zuzugreifen, unbekannt ist, wobei der Kennungscode des wenigstens einen PAC-Clusters von dem Laufwerk nicht erkannt wird.

5. Aufzeichnungsmedium nach Anspruch 4, wobei der wenigstens eine unbekannte PAC-Cluster die PAC-Regeln uaufweist, die verwendet werden sollen, wenn der PAC-Cluster dem Laufwerk unbekannt ist.

6. Aufzeichnungsmedium nach Anspruch 5, wobei die PAC-Regeln den Zugriff auf alle des wenigstens einen unbekannten PAC-Clusters steuern.

7. Aufzeichnungsmedium nach Anspruch 6, wobei die Statusinformation sich für jeden des wenigstens einen unbekannten PAC-Clusters abhängig von den PAC-Regeln ändert.

8. Verfahren zum Wiedergeben von Daten von einem wiederbeschreibbaren Aufzeichnungsmedium mit einer Datenstruktur zum Verwalten eines Datenbereichs des Aufzeichnungsmediums, das aufweist:
Lesen von Statusinformation aus einem Verwaltungsbereich, wobei die Statusinformation einen Status jedes PAC-Clusters innerhalb einer PAC-Zone als unaufgezeichnet, für die Wiederverwendung verfügbar, ungültig oder gültig anzeigt, wobei die Statusinformation sich nach der Reformatierung des Aufzeichnungsmediums ändert, wobei die Statusinformation anzeigt, dass ein PAC-Cluster, der vor der Reformatierung gültig war, nach der Reformatierung als für die Wiederverwendung verfügbar festgelegt wird; und
Lesen wenigstens einer physikalischen Zugangssteuerungs- (PAC-) Information aus wenigstens einem PAC-Cluster basierend auf der Statusinformation, wobei die PAC-Informationen die Aufzeichnung auf dem und/oder die Wiedergabe von dem Aufzeichnungsmedium verwalten, wobei die PAC-Informationen ein PAC-Kennungsfeld, das einen Kennungscode des PAC-Clusters bereitstellt, und ein PAC-Regelfeld umfassen, das anwendbare Operationen eines Laufwerks bezeichnet, das den Kennungscode des PAC-Clusters nicht erkennen kann, wenn das Laufwerk versucht, auf das Aufzeichnungsmedium zuzugreifen.

9. Verfahren nach Anspruch 8, wobei die Statusinformation sich für jeden des wenigstens einen PAC-Clusters basierend auf einem Status jedes des wenigstens einen PAC-Clusters ändert.

10. Verfahren nach Anspruch 9, wobei die Statusinformation sich für jeden des wenigstens einen PAC-Clusters abhängig davon ändert, ob jeder des wenigstens einen PAC-Clusters einem Laufwerk, das versucht, auf das Aufzeichnungsmedium zuzugreifen, bekannt oder unbekannt ist, wobei der Kennungscode des wenigstens einen PAC-Clusters von dem Laufwerk jeweils erkannt oder nicht erkannt wird.

11. Verfahren nach Anspruch 9, wobei wenigstens einer der PAC-Cluster einem Laufwerk, das versucht, auf das Aufzeichnungsmedium zuzugreifen, unbekannt ist, wobei der Kennungscode des wenigstens einen PAC-Clusters von dem Laufwerk nicht erkannt wird.

12. Verfahren nach Anspruch 11, wobei der wenigstens eine unbekannte PAC-Cluster die PAC-Regeln umfasst, die verwendet werden sollen, wenn der PAC-Cluster dem Laufwerk unbekannt ist.

13. Verfahren nach Anspruch 12, wobei die PAC-Regeln den Zugriff auf alle des wenigstens einen unbekannten PAC-Clusters steuern.

14. Verfahren nach Anspruch 13, wobei die Statusinformation sich für jeden des wenigstens einen unbekannten PAC-Clusters abhängig von den PAC-Regeln ändert.

15. Vorrichtung für die Wiedergabe von Daten von einem wiederbeschreibbaren Aufzeichnungsmedium, die aufweist:
eine Abtasteinrichtung (11), die konfiguriert ist, um Daten von dem Aufzeichnungsmedium zu lesen; und
eine Steuerung (16), die konfiguriert ist, um die Abtasteinrichtung (11) zu steuern, um Statusinformationen aus einem Verwaltungsbereich zu lesen, wobei die Statusinformation einen Status jedes PAC-Clusters in einer PAC-Zone als unaufgezeichnet, für die Wiederverwendung verfügbar, ungültig oder gültig anzeigt, wobei die Statusinformation sich nach der Reformatierung des Aufzeichnungsmediums ändert, wobei die Statusinformation anzeigt, dass ein PAC-Cluster, der vor der Reformatierung gültig war, nach der Reformatierung als für die Wiederverwendung verfügbar festgelegt wird; und
um wenigstens eine physikalische Zugangssteuerungs-(PAC-) Information aus wenigstens einem PAC-Cluster basierend auf der Statusinformation zu lesen, wobei die PAC-Informationen die Aufzeichnung auf dem und/oder die Wiedergabe von dem Aufzeichnungsmedium verwalten, wobei die PAC-Informationen ein PAC-Kennungsfeld, das einen Kennungscode des PAC-Clusters bereitstellt, und ein PAC-Regelfeld umfassen, das anwendbare Operationen eines Laufwerks bezeichnet, das den Kennungscode des PAC-Clusters nicht erkennen kann, wenn das Laufwerk versucht, auf das Aufzeichnungsmedium zuzugreifen.

16. Vorrichtung nach Anspruch 15, wobei die Statusinformation sich für jeden des wenigstens einen PAC-Clusters basierend auf einem Status jedes des wenigstens einen PAC-Clusters ändert.

17. Vorrichtung nach Anspruch 16, wobei die Statusinformation sich für jeden des wenigstens einen PAC-Clusters abhängig davon ändert, ob jeder des wenigstens einen PAC-Clusters einem Laufwerk, das versucht, auf das Aufzeichnungsmedium zuzugreifen, bekannt oder unbekannt ist, wobei der Kennungscode des wenigstens einen PAC-Clusters von dem Laufwerk jeweils erkannt oder nicht erkannt wird.

18. Vorrichtung nach Anspruch 15, wobei wenigstens einer der PAC-Cluster einem Laufwerk, das versucht, auf das Aufzeichnungsmedium zuzugreifen, unbekannt ist, wobei der Kennungscode des wenigstens einen PAC-Clusters von dem Laufwerk nicht erkannt wird.

19. Vorrichtung nach Anspruch 18, wobei der wenigstens eine unbekannte PAC-Cluster die PAC-Regeln umfasst, die verwendet werden sollen, wenn der PAC-Cluster dem Laufwerk unbekannt ist.

20. Vorrichtung nach Anspruch 19, wobei die PAC-Regeln den Zugriff auf alle des wenigstens einen unbekannten PAC-Clusters steuern.

21. Vorrichtung nach Anspruch 20, wobei die Statusinformation sich für jeden des wenigstens einen unbekannten PAC-Clusters abhängig von den PAC-Regeln ändert.

22. Aufzeichnungsmedium nach Anspruch 1, das ferner aufweist:
wenigstens eine Datensicherungs-PAC-Zone, die eine Kopie der PAC-Informationen speichert.

23. Aufzeichnungsmedium nach Anspruch 1, das ferner aufweist:
einen Datenbereich, der Nutzerdaten speichert,
wobei die PAC-Informationen Segmente des Datenbereichs spezifizieren, und die Start- und Endpositionen der Segmente an Grenzen der Cluster innerhalb des Datenbereichs bestimmt sind.

24. Aufzeichnungsmedium nach Anspruch 23, wobei die Gesamtanzahl der Segmente in dem Datenbereich kleiner oder gleich einer maximalen Anzahl ist.

25. Verfahren nach Anspruch 8, das ferner aufweist:
Lesen einer Kopie der PAC-Informationen von wenigstens einer Datensicherungs-PAC-Zone des Aufzeichnungsmediums.

26. Verfahren nach Anspruch 8, wobei das Aufzeichnungsmedium ferner einen Datenbereich aufweist, der Nutzerdaten speichert, die PAC-Informationen Segmente des Datenbereichs spezifizieren, und die Start- und Endpositionen der Segmente an Grenzen der Cluster innerhalb des Datenbereichs bestimmt sind.

27. Verfahren nach Anspruch 26, wobei die Gesamtanzahl der Segmente in dem Datenbereich kleiner oder gleich einer maximalen Anzahl ist.

28. Vorrichtung nach Anspruch 15, wobei die Steuerung (16) die Abtasteinrichtung (11) steuert, um eine Kopie der PAC-Informationen in wenigstens einer Datensicherungs-PAC-Zone des Aufzeichnungsmediums zu lesen.

29. Vorrichtung nach Anspruch 15, wobei das Aufzeichnungsmedium ferner einen Datenbereich aufweist, der Nutzerdaten speichert, die PAC-Informationen Segmente des Datenbereichs spezifizieren, und die Start- und Endpositionen der Segmente an Grenzen der Cluster innerhalb des Datenbereichs bestimmt sind.

30. Vorrichtung nach Anspruch 29, wobei die Gesamtanzahl der Segmente in dem Datenbereich kleiner oder gleich einer maximalen Anzahl ist.

31. Verfahren zum Aufzeichnen von Daten auf einem wiederbeschreibbaren Aufzeichnungsmedium, das aufweist:
Aufzeichnen wenigstens einer PAC-Information auf dem Aufzeichnungsmedium, wobei die PAC-Information in wenigstens einem PAC-Cluster gespeichert wird, wobei die PAC-Informationen die Aufzeichnung auf dem und/oder die Wiedergabe von dem Aufzeichnungsmedium verwalten, wobei die PAC-Informationen ein PAC-Kennungsfeld, das einen Kennungscode des PAC-Clusters bereitstellt, und ein PAC-Regelfeld umfassen, das anwendbare Operationen eines Laufwerks bezeichnet, das den Kennungscode des PAC-Clusters nicht erkennen kann, wenn das Laufwerk versucht, auf das Aufzeichnungsmedium zuzugreifen; und
Aufzeichnen von Statusinformationen für den wenigstens einen PAC-Cluster auf dem Aufzeichnungsmedium, wobei die Statusinformation einen Status jedes der PAC-Cluster als unaufgezeichnet, für die Wiederverwendung verfügbar, ungültig oder gültig anzeigt, wobei die Statusinformation sich nach der Reformatierung des Aufzeichnungsmediums ändert, wobei die Statusinformation anzeigt, dass der wenigstens eine PAC-Cluster, der vor der Reformatierung gültig war, nach der Reformatierung als für die Wiederverwendung verfügbar festgelegt wird.

32. Verfahren nach Anspruch 31, das ferner aufweist:
Aufzeichnen einer Kopie der PAC-Informationen in wenigstens einer Datensicherungs-PAC-Zone des Aufzeichnungsmediums.

33. Verfahren nach Anspruch 31, das ferner aufweist:
Aufzeichnen von Nutzerdaten in einem Datenbereich des Aufzeichnungsmediums,
wobei die PAC-Informationen Segmente des Datenbereichs spezifizieren, und die Start- und Endpositionen der Segmente an Grenzen der Cluster innerhalb des Datenbereichs bestimmt werden.

34. Verfahren nach Anspruch 33, wobei die Gesamtanzahl der Segmente in dem Datenbereich kleiner oder gleich einer maximalen Anzahl ist.

35. Vorrichtung zum Aufzeichnen von Daten in einem wiederbeschreibbaren Aufzeichnungsmedium, die aufweist:
eine Abtasteinrichtung (11), die konfiguriert ist, um Daten auf das Aufzeichnungsmedium aufzuzeichnen; und
eine Steuerung (16), die konfiguriert ist, um die Abtasteinrichtung (11) zu steuern, um wenigstens eine PAC-Information auf das Aufzeichnungsmedium aufzuzeichnen, wobei die PAC-Informationen in wenigstens einen PAC-Cluster gespeichert werden, wobei die PAC-Informationen die Aufzeichnung auf dem und/oder die Wiedergabe von dem Aufzeichnungsmedium verwalten, wobei die PAC-Informationen ein PAC-Kennungsfeld, das einen Kennungscode des PAC-Clusters bereitstellt, und ein PAC-Regelfeld umfassen, das anwendbare Operationen eines Laufwerks bezeichnet, das den Kennungscode des PAC-Clusters nicht erkennen kann, wenn das Laufwerk versucht, auf das Aufzeichnungsmedium zuzugreifen; und
um Statusinformation für den wenigstens einen PAC-Cluster aufzuzeichnen, wobei die Statusinformation einen Status jedes der PAC-Cluster als unaufgezeichnet, für die Wiederverwendung verfügbar, ungültig oder gültig anzeigt, wobei die Statusinformation sich nach der Reformatierung des Aufzeichnungsmediums ändert, wobei die Statusinformation anzeigt, dass der wenigstens eine PAC-Cluster, der vor der Reformatierung gültig war, nach der Reformatierung als für die Wiederverwendung verfügbar festgelegt wird.

36. Vorrichtung nach Anspruch 35, wobei die Steuerung (16) die Abtasteinrichtung (11) steuert, um eine Kopie der PAC-Informationen in wenigstens einer Datensicherungs-PAC-Zone des Aufzeichnungsmediums aufzuzeichnen.

37. Vorrichtung nach Anspruch 35, wobei die Steuerung (16) die Abtasteinrichtung (11) steuert, um Nutzerdaten in einem Datenbereich des Aufzeichnungsmediums aufzuzeichnen, und die PAC-Informationen Segmente des Datenbereichs spezifizieren, und die Start- und Endpositionen der Segmente an Grenzen der Cluster innerhalb des Datenbereichs bestimmt sind.

38. Vorrichtung nach Anspruch 37, wobei die Gesamtanzahl der Segmente in dem Datenbereich kleiner oder gleich einer maximalen Anzahl ist.

## Revendications

1. Support d'enregistrement réinscriptible présentant une structure de données pour gérer un accès au support d'enregistrement, comportant :
au moins une zone de contrôle d'accès physique (PAC) incluant au moins une grappe de contrôle d'accès physique (PAC), ladite au moins une grappe de contrôle PAC stockant des informations de contrôle PAC, les informations de contrôle PAC gérant un enregistrement sur et/ou une reproduction depuis le support d'enregistrement, les informations de contrôle PAC incluant un champ d'identification de contrôle PAC fournissant un code d'identification de la grappe de contrôle PAC, et un champ de règles de contrôle PAC désignant les opérations applicables d'un lecteur qui ne parvient pas à reconnaître le code d'identification de la grappe de contrôle PAC lorsque le lecteur tente d'accéder au support d'enregistrement ; et
au moins une zone stockant des informations d'état pour ladite au moins une grappe de contrôle PAC, les informations d'état indiquant un état de chacune des grappes de contrôle PAC comme non enregistrée, disponible en vue de sa réutilisation, non valide, ou valide, les informations d'état étant modifiées lors du reformatage du support d'enregistrement, dans lequel les informations d'état indiquent que ladite au moins une grappe de contrôle PAC qui était valide avant le reformatage est définie de manière à être disponible en vue de sa réutilisation, après reformatage.

2. Support d'enregistrement selon la revendication 1, dans lequel les informations d'état changent pour chacune de ladite au moins une grappe de contrôle PAC, sur la base d'un état de chacune de ladite au moins une grappe de contrôle PAC.

3. Support d'enregistrement selon la revendication 2, dans lequel les informations d'état changent pour chacune de ladite au moins une grappe de contrôle PAC selon que chacune de ladite au moins une grappe de contrôle PAC est connue ou inconnue d'un lecteur tentant d'accéder au support d'enregistrement, dans lequel le code d'identification de ladite au moins une grappe de contrôle PAC est reconnu ou n'est pas reconnu par le lecteur, respectivement.

4. Support d'enregistrement selon la revendication 1, dans lequel au moins l'une des grappes de contrôle PAC est inconnue d'un lecteur tentant d'accéder au support d'enregistrement, dans lequel le code d'identification de ladite au moins une grappe de contrôle PAC n'est pas reconnu par le lecteur.

5. Support d'enregistrement selon la revendication 4, dans lequel ladite au moins une grappe de contrôle PAC inconnue inclut les règles de contrôle PAC qui doivent être utilisées lorsque la grappe de contrôle PAC est inconnue du lecteur.

6. Support d'enregistrement selon la revendication 5, dans lequel les règles de contrôle PAC commandent l'accès à la totalité des grappes de ladite au moins une grappe de contrôle PAC inconnue.

7. Support d'enregistrement selon la revendication 6, dans lequel les informations d'état changent pour chacune de ladite au moins une grappe de contrôle PAC inconnue, en fonction des règles de contrôle PAC.

8. Procédé de reproduction de données à partir d'un support d'enregistrement réinscriptible présentant une structure de données pour gérer une zone de données du support d'enregistrement, consistant à :
lire des informations d'état à partir d'une zone de gestion, les informations d'état indiquant un état de chaque grappe de contrôle PAC au sein d'une zone de contrôle PAC comme non enregistrée, disponible en vue de sa réutilisation, non valide ou valide, les informations d'état étant modifiées lors du reformatage du support d'enregistrement, dans lequel les informations d'état indiquent qu'une grappe de contrôle PAC valide qui était valide avant le reformatage est définie de manière à être disponible en vue de sa réutilisation, après reformatage ; et
lire au moins une information de contrôle d'accès physique (PAC) à partir d'au moins une grappe de contrôle PAC sur la base des informations d'état, les informations de contrôle PAC gérant un enregistrement sur et/ou une reproduction depuis le support d'enregistrement, les informations de contrôle PAC incluant un champ d'identification de contrôle PAC fournissant un code d'identification de la grappe de contrôle PAC, et un champ de règles de contrôle PAC désignant les opérations applicables d'un lecteur qui ne parvient pas à reconnaître le code d'identification de la grappe de contrôle PAC lorsque le lecteur tente d'accéder au support d'enregistrement.

9. Procédé selon la revendication 8, dans lequel les informations d'état changent pour chacune de ladite au moins une grappe de contrôle PAC, sur la base d'un état de chacune de ladite au moins une grappe de contrôle PAC.

10. Procédé selon la revendication 9, dans lequel les informations d'état changent pour chacune de ladite au moins une grappe de contrôle PAC selon que chacune de ladite au moins une grappe de contrôle PAC est connue ou inconnue d'un lecteur tentant d'accéder au support d'enregistrement, dans lequel le code d'identification de ladite au moins une grappe de contrôle PAC est reconnu ou n'est pas reconnu par le lecteur, respectivement.

11. Procédé selon la revendication 9, dans lequel au moins l'une des grappes de contrôle PAC est inconnue d'un lecteur tentant d'accéder au support d'enregistrement, dans lequel le code d'identification de ladite au moins une grappe de contrôle PAC n'est pas reconnu par le lecteur.

12. Procédé selon la revendication 11, dans lequel ladite au moins une grappe de contrôle PAC inconnue inclut les règles de contrôle PAC qui doivent être utilisées lorsque la grappe de contrôle PAC est inconnue du lecteur.

13. Procédé selon la revendication 12, dans lequel les règles de contrôle PAC commandent l'accès à la totalité des grappes de ladite au moins une grappe de contrôle PAC inconnue.

14. Procédé selon la revendication 13, dans lequel les informations d'état changent pour chacune de ladite au moins une grappe de contrôle PAC inconnue, en fonction des règles de contrôle PAC.

15. Dispositif destiné à reproduire des données à partir d'un support d'enregistrement réinscriptible, comportant :
un capteur (11) configuré de manière à lire des données à partir d'un support d'enregistrement ; et
un contrôleur (16) configuré de manière à commander au capteur (11) de lire des informations d'état à partir d'une zone de gestion, les informations d'état indiquant un état de chaque grappe de contrôle PAC au sein d'une zone de contrôle PAC comme non enregistrée, disponible en vue de sa réutilisation, non valide ou valide, les informations d'état étant modifiées lors du reformatage du support d'enregistrement, dans lequel les informations d'état indiquent qu'une grappe de contrôle PAC qui était valide avant un reformatage est définie de manière à être disponible en vue de sa réutilisation, après reformatage ; et
à lire au moins une information de contrôle d'accès physique (PAC) à partir d'au moins une grappe de contrôle PAC sur la base des informations d'état, les informations de contrôle PAC gérant un enregistrement sur et/ou une reproduction depuis le support d'enregistrement, les informations de contrôle PAC incluant un champ d'identification de contrôle PAC fournissant un code d'identification de la grappe de contrôle PAC, et un champ de règles de contrôle PAC désignant les opérations applicables d'un lecteur qui ne parvient pas à reconnaître le code d'identification de la grappe de contrôle PAC lorsque le lecteur tente d'accéder au support d'enregistrement.

16. Dispositif selon la revendication 15, dans lequel les informations d'état changent pour chacune de ladite au moins une grappe de contrôle PAC, sur la base d'un état de chacune de ladite au moins une grappe de contrôle PAC.

17. Dispositif selon la revendication 16, dans lequel les informations d'état changent pour chacune de ladite au moins une grappe de contrôle PAC selon que chacune de ladite au moins une grappe de contrôle PAC est connue ou inconnue du lecteur, dans lequel le code d'identification de ladite au moins une grappe de contrôle PAC est reconnu ou n'est pas reconnu par le lecteur, respectivement.

18. Dispositif selon la revendication 15, dans lequel au moins l'une des grappes de contrôle PAC est inconnue d'un lecteur tentant d'accéder au support d'enregistrement, dans lequel le code d'identification de ladite au moins une grappe de contrôle PAC n'est pas reconnu par le lecteur.

19. Dispositif selon la revendication 18, dans lequel ladite au moins une grappe de contrôle PAC inconnue inclut les règles de contrôle PAC qui doivent être utilisées lorsque la grappe de contrôle PAC est inconnue du lecteur.

20. Dispositif selon la revendication 19, dans lequel les règles de contrôle PAC commandent l'accès à ladite au moins une grappe de contrôle PAC inconnue.

21. Dispositif selon la revendication 20, dans lequel les informations d'état changent pour ladite au moins une grappe de contrôle PAC inconnue en fonction des règles de contrôle PAC.

22. Support d'enregistrement selon la revendication 1, comportant en outre :
au moins une zone de contrôle PAC de secours stockant une copie des informations de contrôle PAC.

23. Support d'enregistrement selon la revendication 1, comportant en outre :
une zone de données stockant des données d'utilisateur ;
dans lequel les informations de contrôle PAC spécifient des segments de la zone de données, et les positions de début et de fin des segments sont désignées au niveau de frontières de grappes au sein de la zone de données.

24. Support d'enregistrement selon la revendication 23, dans lequel le nombre total des segments dans la zone de données est inférieur ou égal à un nombre maximum.

25. Procédé selon la revendication 8, consistant en outre à :
lire une copie des informations de contrôle PAC à partir d'au moins une zone de contrôle PAC de secours du support d'enregistrement.

26. Procédé selon la revendication 8, dans lequel le support d'enregistrement comporte en outre une zone de données stockant des données d'utilisateur, les informations de contrôle PAC spécifient des segments de la zone de données, et les positions de début et de fin des segments sont désignées au niveau de frontières de grappes au sein de la zone de données.

27. Procédé selon la revendication 26, dans lequel le nombre total des segments dans la zone de données est inférieur ou égal à un nombre maximum.

28. Dispositif selon la revendication 15, dans lequel le contrôleur (16) commande au capteur (11) de lire une copie des informations de contrôle PAC dans au moins une zone de contrôle PAC de secours du support d'enregistrement.

29. Dispositif selon la revendication 15, dans lequel le support d'enregistrement comporte en outre une zone de données stockant des données d'utilisateur, les informations de contrôle PAC spécifient des segments de la zone de données, et les positions de début et de fin des segments sont désignées au niveau de frontières de grappes au sein de la zone de données.

30. Dispositif selon la revendication 29, dans lequel le nombre total des segments dans la zone de données est inférieur ou égal à un nombre maximum.

31. Procédé d'enregistrement de données sur un support d'enregistrement réinscriptible, consistant à :
enregistrer au moins une information de contrôle PAC sur le support d'enregistrement, les informations de contrôle PAC étant stockées dans au moins une grappe de contrôle PAC, les informations de contrôle PAC gérant un enregistrement sur et/ou une reproduction depuis le support d'enregistrement, les informations de contrôle PAC incluant un champ d'identification de contrôle PAC fournissant un code d'identification de la grappe de contrôle PAC, et un champ de règles de contrôle PAC désignant les opérations applicables d'un lecteur qui ne parvient pas à reconnaître le code d'identification de la grappe de contrôle PAC lorsque le lecteur tente d'accéder au support d'enregistrement : et
enregistrer des informations d'état pour ladite au moins une grappe de contrôle PAC sur le support d'enregistrement, les informations d'état indiquant un état de chacune des grappes de contrôle PAC comme non enregistrée, disponible en vue de sa réutilisation, non valide, ou valide, les informations d'état étant modifiées lors du reformatage du support d'enregistrement, dans lequel les informations d'état indiquent que ladite au moins une grappe de contrôle PAC valide, qui était valide avant le reformatage, est définie de manière à être disponible en vue de sa réutilisation, après reformatage.

32. Procédé selon la revendication 31, consistant en outre à :
enregistrer une copie des informations de contrôle PAC dans au moins une zone de contrôle PAC de secours du support d'enregistrement.

33. Procédé selon la revendication 31, consistant en outre à :
enregistrer des données d'utilisateur dans une zone de données du support d'enregistrement ;
dans lequel les informations de contrôle PAC spécifient des segments de la zone de données, et les positions de début et de fin des segments sont désignées au niveau de frontières de grappes au sein de la zone de données.

34. Procédé selon la revendication 33, dans lequel le nombre total des segments dans la zone de données est inférieur ou égal à un nombre maximum.

35. Dispositif destiné à enregistrer des données dans un support d'enregistrement réinscriptible, comportant :
un capteur (11) configuré de manière à enregistrer des données sur le support d'enregistrement ; et
un contrôleur (16) configuré de manière à commander au capteur (11) d'enregistrer au moins une information de contrôle PAC sur le support d'enregistrement, les informations de contrôle PAC étant stockées dans au moins une grappe de contrôle PAC, les informations de contrôle PAC gérant un enregistrement sur et/ou une reproduction depuis le support d'enregistrement, les informations de contrôle PAC incluant un champ d'identification de contrôle PAC fournissant un code d'identification de la grappe de contrôle PAC, et un champ de règles de contrôle PAC désignant les opérations applicables d'un lecteur qui ne parvient pas à reconnaître le code d'identification de la grappe de contrôle PAC, lorsque le lecteur tente d'accéder au support d'enregistrement : et
à enregistrer des informations d'état pour ladite au moins une grappe de contrôle PAC, les informations d'état indiquant un état de chacune des grappes de contrôle PAC comme non enregistrée, disponible en vue de sa réutilisation, non valide, ou valide, les informations d'état étant modifiées lors du reformatage du support d'enregistrement, dans lequel les informations d'état indiquent que ladite au moins une grappe de contrôle PAC, qui était valide avant le reformatage, est définie de manière à être disponible en vue de sa réutilisation, après reformatage.

36. Dispositif selon la revendication 35, dans lequel le contrôleur (16) commande au capteur (11) d'enregistrer une copie des informations de contrôle PAC dans au moins une zone de contrôle PAC de secours du support d'enregistrement.

37. Dispositif selon la revendication 35, dans lequel le contrôleur (16) commande au capteur (11) d'enregistrer des données d'utilisateur dans une zone de données du support d'enregistrement, et les informations de contrôle PAC spécifient des segments de la zone de données, et les positions de début et de fin des segments sont désignées au niveau de frontières de grappes au sein de la zone de données.

38. Dispositif selon la revendication 37, dans lequel le nombre total des segments dans la zone de données est inférieur ou égal à un nombre maximum.
